(19)

**Europäisches Patentamt**
**European Patent Office**
**Office européen des brevets**

(11) **EP 4 552 915 A1**

(12) **EUROPEAN PATENT APPLICATION**

(43) Date of publication:
**14.05.2025 Bulletin 2025/20**

(21) Application number: **24207271.8**

(22) Date of filing: **17.10.2024**

(51) International Patent Classification (IPC):
*B60L 53/63* (2019.01)    *B60L 53/66* (2019.01)
*B60L 53/67* (2019.01)    *B60L 53/68* (2019.01)
*H02J 7/00* (2006.01)    *B60L 53/62* (2019.01)
*H02J 3/14* (2006.01)    *H02J 3/26* (2006.01)
*H02J 3/32* (2006.01)

(52) Cooperative Patent Classification (CPC):
**B60L 53/63; B60L 53/62; B60L 53/665;**
**B60L 53/67; B60L 53/68; H02J 3/14; H02J 3/144;**
**H02J 3/322;** B60L 2240/70; B60L 2240/80;
H02J 2310/60

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **09.11.2023 SG 10202303192S**
**10.04.2024 US 202418631082**
**29.07.2024 US 202418787058**

(71) Applicant: **Lite-On Singapore Pte. Ltd.**
**Singapore 556741 (SG)**

(72) Inventors:
• **KOW, Ken-Weng**
**556741 Singapore (SG)**

• **HAMIMAH, Binte Ahmad Jefri**
**556741 Singapore (SG)**
• **ZHONG, Zhi-Ming**
**556741 Singapore (SG)**
• **YANG, Jing**
**556741 Singapore (SG)**
• **LAU, En Cheng Benjin**
**556741 Singapore (SG)**

(74) Representative: **dompatent von Kreisler Selting**
**Werner -**
**Partnerschaft von Patent- und Rechtsanwälten**
**mbB**
**Deichmannhaus am Dom**
**Bahnhofsvorplatz 1**
**50667 Köln (DE)**

(54) **METHOD AND SYSTEM FOR CHARGING ELECTRIC VEHICLE AT AN ELECTRIC VEHICLE CHARGING STATION**

(57)    A method for charging electric vehicle (EV) at an electric vehicle charging station equipped with electric vehicle supply equipments (EVSEs) is provided. A normal charging procedure is performed on the EVSEs to charge EV under control of a cloud controller. Dynamic load management (DLM) is inactive during the normal charging procedure. A first time point, referred to whether a total load is equal to or larger than a trigger threshold during the normal charging procedure, is determined. If the determination is yes, DLM is activated to charge the at least one EV by the EVSEs under control of an edge controller. A second time point, referred to whether a gradient of the total load reaches a gradient threshold during activated DLM, is determined. If the determination is yes, the charging capacity of each EVSE is adjusted based on an available EV charging capacity by the edge controller.

**EP 4 552 915 A1**

Start

102

A normal charging procedure is performed on the EVSEs to charge at least one EV by the EVSEs under the control of a cloud controller

104

The first time point, which is referred to whether the total load is equal to or larger than a trigger threshold during the normal charging procedure, is determined

106

When the total load, corresponding to the first time point, is equal to or larger than the trigger threshold during the normal charging procedure, DLM is activated to charge the at least one EV by the EVSEs under the control of an edge controller

108

The second time point, which is referred to whether a gradient of the total load reaches a gradient threshold during activated DLM, is determined

110

When the gradient of the total load at the second time point reaches the gradient threshold during activated DLM, the charging capacity of each EVSE is adjusted based on an available EV charging capacity corresponding to the second time point by the edge controller

End

# FIG. 1A

**Description**

TECHNICAL FIELD

The disclosure relates to a method and system for charging electric vehicle (EV) at an electric vehicle charging station.

BACKGROUND

International efforts to mitigate global warming have begun, driving the progress of electric vehicles (EVs) toward the goal of eliminating fuel consumption. The charging equipment industry is observing the trend toward vehicle electrification and is actively expanding the number of charging stations to enable broader access for drivers to charge their EVs.

With the increasing adoption of EVs, there is a growing urgency for efficient energy demand management. Effectively balancing electric vehicle supply equipment (EVSE) loads within available capacity and reducing peak demand to prevent system overloads have become critical industry tasks.

SUMMARY

According to one embodiment, a method for charging electric vehicle (EV) at an electric vehicle charging station equipped with a number of electric vehicle supply equipment (EVSE) is provided. The method includes the following steps. A normal charging procedure is performed on the EVSEs to charge at least one EV by the EVSEs under control of a cloud controller. Dynamic load management (DLM) is inactive during the normal charging procedure. The first time point, which is referred to whether the total load is equal to or larger than a trigger threshold during the normal charging procedure, is determined. The total load corresponds to a first load of other building loads, and a second load of the EVSEs, in which, both other building loads and EVSEs are part of a building, and the other building loads and the EVSEs receive power from the main incoming from grid via a power line. When the total load corresponding to the first time point is equal to or larger than the trigger threshold during the normal charging procedure, DLM is activated to charge the at least one EV by the EVSEs under control of an edge controller. The second time point, which is referred to whether a gradient of the total load reaches a gradient threshold during activated DLM, is determined. When the gradient of the total load at the second time point reaches the gradient threshold during activated DLM, the charging capacity of each EVSE is adjusted based on an available EV charging capacity corresponding to the second time point by the edge controller.

According to another embodiment, a system for charging EV at an electric vehicle charging station equipped with a number of EVSE is provided. The system includes a cloud controller and an edge controller. The cloud controller is configured to perform a normal charging procedure on the EVSEs to charge at least one EV by the EVSEs under the control of the cloud controller. DLM is inactive during the normal charging procedure. The edge controller is configured to perform the following procedures. The first time point, which is referred to whether the total load is equal to or larger than a trigger threshold during the normal charging procedure, is determined. The total load corresponds to a first load of other building loads and a second load of the EVSEs, and the other building loads and the EVSEs receive power from the main incoming from grid via a power line. When the total load corresponding to the first time point is equal to or larger than the trigger threshold during the normal charging procedure, DLM is activated to charge the at least one EV by the EVSEs under the control of the edge controller. The second time point, which is referred to whether a gradient of the total load reaches a gradient threshold during activated DLM, is determined. When the gradient of the total load at the second time point reaches the gradient threshold during activated DLM, the charging capacity of each EVSE is adjusted based on an available EV charging capacity corresponding to the second time point.

BRIEF DESCRIPTION OF THE DRAWINGS

FIG. 1A illustrates a flowchart for a method for charging electric vehicle (EV) at an electric vehicle charging station equipped with a number of electric vehicle supply equipment (EVSE) according to an embodiment of the disclosure.

FIG. 1B illustrates another flowchart for a method for charging EV at an electric vehicle charging station equipped with a number of EVSEs according to an embodiment of the disclosure.

FIG. 2A illustrates an electric vehicle charging station having a number of EVSEs and corresponding other building loads and the main incoming from grid during the normal charging procedure without DLM.

FIG. 2B illustrates the value of the current for charging the EVs and the value of the current for the other building loads in FIG. 2A during the normal charging procedure without DLM.

FIG. 3A illustrates an electric vehicle charging station having a number of EVSEs and corresponding other building loads and the main incoming from grid during DLM.

FIG. 3B illustrates the value of the current for charging the EVs and the value of the current for the other building loads in FIG. 3A during DLM.

FIG. 4A shows a block diagram of a system for charging at least one EV at an electric vehicle charging station equipped with a number of EVSEs according to an embodiment of the disclosure.

FIG. 4B shows another block diagram of a system for charging EV at an electric vehicle charging station equipped with a number of EVSEs according to an embodiment of the disclosure.

FIG. 5A shows a flowchart for activating DLM corresponding to the steps 102 to 106 of FIG. 1A and FIG. 1B.

FIG. 5B shows another flowchart for activating DLM corresponding to steps 102 to 106 of FIG. 1A and FIG. 1B.

FIG. 6A and FIG. 6B show a flowchart for the processes of charging control corresponding to the steps 108 to 114 of FIG. 1A and FIG. 1B.

FIG. 6C and FIG. 6D show another flowchart for the processes of charging control corresponding to the steps 108 to 114 of FIG. 1A and FIG. 1B.

FIG. 7 illustrates an example of operating the method for charging EV at an electric vehicle charging station equipped with a number of EVSEs according to an embodiment of the disclosure.

FIG. 8 shows another example of operating the method for charging EV at an electric vehicle charging station equipped with a number of EVSEs according to an embodiment of the disclosure.

FIG. 9 illustrates a further example of operating the method for charging EV at an electric vehicle charging station equipped with a number of EVSEs according to an embodiment of the disclosure is illustrated.

FIG. 10 shows several cases based on the example in FIG. 9.

FIG. 11 shows a corresponding circuit for explaining the cases of FIG. 10.

In the following description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

DETAILED DESCRIPTION

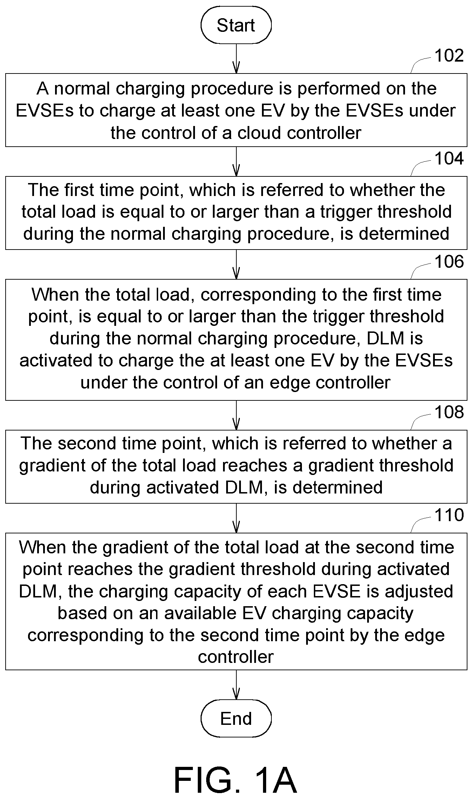

Referring to FIG. 1A, a flowchart for a method for charging electric vehicles (EVs) at an electric vehicle charging station equipped with a number of electric vehicle supply equipment (EVSE) according to an embodiment of the disclosure is illustrated. In step 102, a normal charging procedure is performed on the EVSEs to charge at least one EV by the EVSEs under the control of a cloud controller. Dynamic load management (DLM) is inactive during the normal charging procedure. In step 104, the first time point, which is referred to whether the total load is equal to or larger than a trigger threshold during the normal charging procedure, is determined. The total load corresponds to a first load of other building loads and a second load of the EVSEs, and the other building loads and the EVSEs are provided with power through a power line from the main incoming from grid. In step 106, when the total load, corresponding to the first time point, is equal to or larger than the trigger threshold during the normal charging procedure, DLM is activated to charge the at least one EV by the EVSEs under the control of an edge controller. In step 108, the second time point, which is referred to whether a gradient of the total load reaches a gradient threshold during activated DLM, is determined. In step 110, when the gradient of the total load at the second time point reaches the gradient threshold during activated DLM, the charging capacity of each EVSE is adjusted based on an available EV charging capacity corresponding to the second time point by the edge controller.

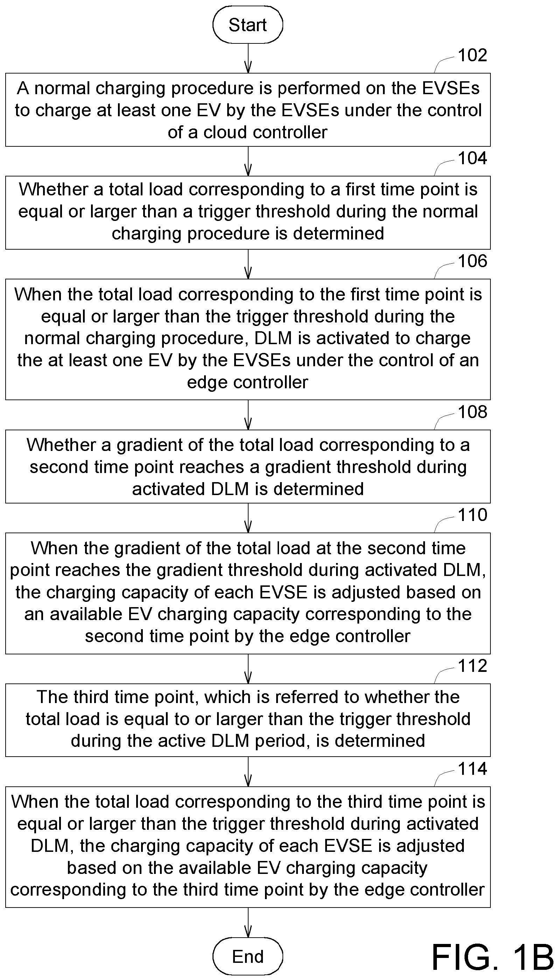

Referring to FIG. 1B, another flowchart for a method for charging EV at an electric vehicle charging station equipped with a number of EVSEs according to an embodiment of the disclosure is illustrated. Compared to the method of FIG. 1A, the method for charging EV at an electric vehicle charging station equipped with a number of EVSEs according to an embodiment of the disclosure in FIG. 1B can further include step 112 and step 114. In step 112, the third time point, which is referred to whether the total load is equal to or larger than the trigger threshold during the active DLM period, is determined. In step 114, when the total load corresponding to the third time point is equal to or larger than the trigger threshold during activated DLM, the charging capacity of each EVSE is adjusted based on the available EV charging capacity corresponding to the third time point by the edge controller.

In step 110, the charging capacity of each EVSE is adjusted proportionally according to a maximum charging capacity of corresponding EVSE. In step 114, the charging capacity of each EVSE is adjusted proportionally according to the maximum charging capacity of corresponding EVSE.

Furthermore, the step 110 of adjusting the charging capacity of each EVSE based on the available EV charging capacity corresponding to the second time point by the edge controller in step 110 of FIG. 1A can include the following steps. The available EV charging capacity at the second time point is calculated. EV charging control is conducted. The number of EVSEs in use at the second time point is determined. A total maximum EVSE capacity in use at the second time point is calculated. A charging rate of each EVSE at the second time point is calculated. The charging capacity of each EVSE at the second time point is calculated based on the available EV charging capacity at the second time point and the charging rate of each EVSE at the second time point. The at least one EV in use is charged by the EVSEs with the calculated charging capacity of each EVSE. The charging rate of each EVSE at the second time point is proportional to a maximum charging capacity of corresponding EVSE.

The step 114 of adjusting the charging capacity of each EVSE based on the available EV charging capacity corresponding to the third time point by the edge controller mentioned above can include the following steps. The available EV charging capacity at the third time point is calculated. EV charging control is conducted. The number of EVSEs in use at the third time point is determined. A total maximum EVSE capacity in use at the third time point is calculated. The charging rate of each EVSE at the third time point is calculated. The charging capacity of each EVSE at the third time point is calculated based on the available EV charging capacity at the third time point and the charging rate of each EVSE at the third time point. The at least one EV in use is charged by the EVSEs with the calculated charging capacity of each EVSE. The charging rate of each EVSE at the third time point is proportional to a maximum charging capacity of corresponding EVSE. The method will be described in more detail as follows.

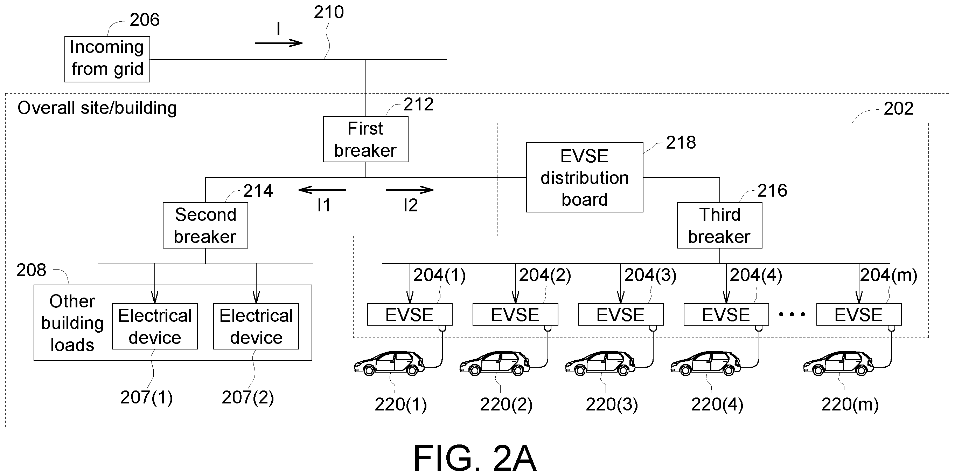

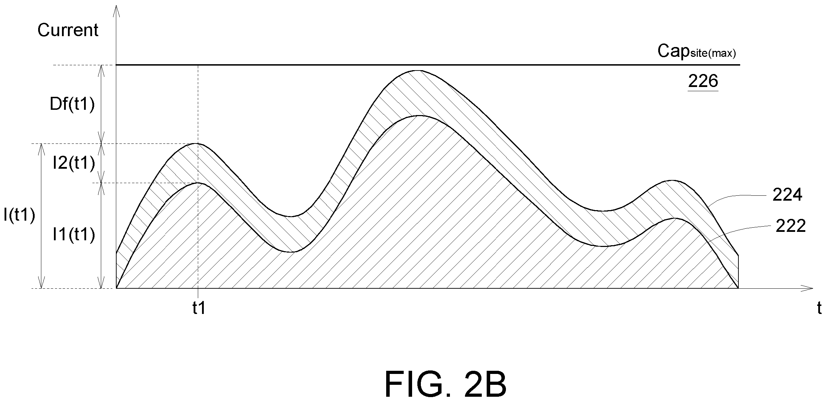

Referring to FIG. 2A and FIG. 2B, FIG. 2A illustrates an electric vehicle charging station having a number of EVSEs and corresponding other building loads and the main incoming from grid during the normal charging procedure without DLM. FIG. 2B illustrates the value of the current for charging the EVs and the value of the current for the other building loads in FIG. 2A during the normal charging procedure without DLM. As shown in FIG. 2A, an electric vehicle charging station 202 is equipped with a number of EVSEs, for example EVSEs 204(1) to 204(m), and m is an integer. Main incoming from grid 206 provides power to other building loads 208 and the EVSEs 204(1) to 204(m) through a power line 210.

The total load corresponds to a first load of the other building loads 208 and a second load of the EVSEs 204(1) to 204(m). For example, the total load is a sum of the first load of the other building loads 208 and the second load of the EVSEs 204(1) to 204(m). The term "load" can be referred to the corresponding current or the corresponding power consumption. Therefore, the total load can be a sum of a current $I1(t)$ for the other building loads 208 and a current $I2(t)$ for the EVSEs 204(1) to 204(m). Or the total load is a sum of power consumption for the other building loads 208 and power consumption for the EVSEs 204(1) to 204(m). In FIG. 2A and FIG. 2B, the total load being a sum of a current $I1(t)$ for the other building loads 208 and a current $I2(t)$ for the EVSEs 204(1) to 204(m) are taken for example, and the total load is represented by a current $I(t)$, wherein $I(t)=I1(t)+I2(t)$. In some embodiment, the total load corresponds to total building power consumption corresponding to the EVSEs.

The main incoming from grid 206 is coupled to a first breaker 212, the other building loads 208 are coupled to a second breaker 214, and the EVSEs 204(1) to 204(m) are coupled to a third breaker 216. The other building loads 208 are coupled to the main incoming from grid 206 through the first breaker 212 and a second breaker 214, and the EVSEs 204(1) to 204(m) are coupled to the main incoming from grid 206 through the first breaker 212 and the third breaker 216. The first breaker 212, the second breaker 214, and the third breaker 216 can be implemented by miniature circuit breaker (MCB) or molded case circuit breaker (MCCB), for example. In some embodiment, the main incoming from grid 206 may be replaced by a power system inside the building.

The electric vehicle charging station 202 can further include an EVSE distribution board 218 for the electrical power distribution and safety of charging EVs 220(1) to 220(m) by the EVSEs 204(1) to 204(m). For example, when a number of EVSEs 204(1) to 204(m) are in use, the electric power flows through the EVSE distribution board 218 and are distributed amongst the number of EVSEs 204(1) to 204(m) in use, and the EVSE distribution board 218, housing electrical safety devices, which are not limited to the third breaker 216, can detect and protect the electric vehicle charging station 202 from current or voltage related damage.

The other building loads 208 contain a number of electrical devices, such as electrical devices 207(1) and 207(2). These electrical devices may include motors, lights, and other components through which electrical currents flow in the other building loads 208. Due to the variable number of electrical devices and the variable electrical currents flowing through the electrical devices, the current I1(t) for the other building loads 208 is consequently variable.

Referring to FIG. 2B, a curve 222 represents the value of the current I1 for the other building loads 208 while a curve 224 represents the value of the current I, which is the sum of the value of the current I1 for the other building loads 208 and the value of the current I2 for the EVSEs 204(1) to 204(m). At time point t1, the value of the current I(t1) is a sum of the value of the current I1 (t1) for the other building loads 208 and the value of the current I2(t1) for the EVSEs 204(1) to 204(m). Additionally, the value Df(t1) represents the difference between the maximum site capacity $Cap_{Site(Max)}$ of the main incoming from grid 206 and the value of the current I(t1). In FIG. 2B, the area 226 corresponding to the value Df above the curve 224 indicates the unused capacity.

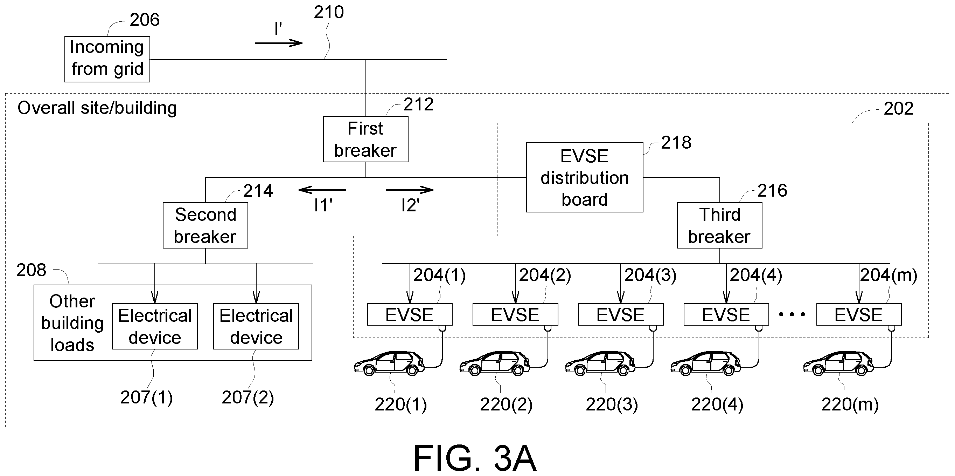

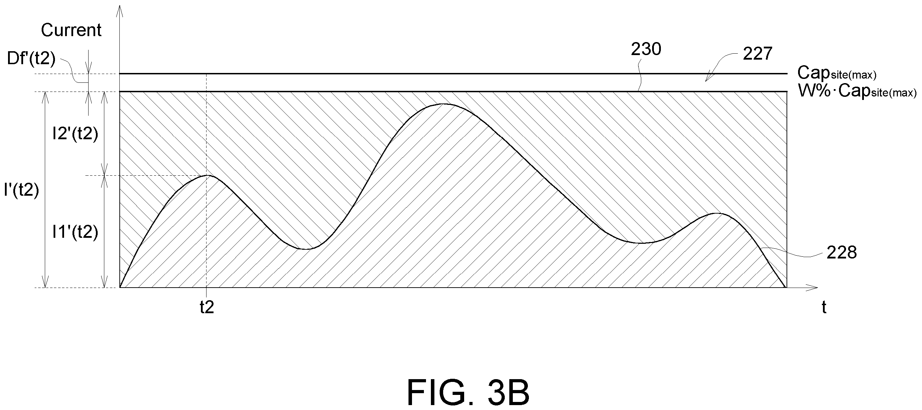

Referring to FIG. 3A and FIG. 3B, FIG. 3A illustrates an electric vehicle charging station having a number of EVSEs and corresponding other building loads and the main incoming from grid during DLM. FIG. 3B illustrates the maximum potential value of the current for charging the EVs and the value of the current for the other building loads in FIG. 3A during DLM. In FIG. 3B, a curve 228 represents the value of the current I1' for the other building loads 208 while a line 230 represents the value of the current I', which is a sum of the value of the current I1' for the other building loads 208 and the value of the current I2' for the EVSEs 204(1) to 204(m). In this example, the line 230 represents the value of W% of the maximum site capacity $Cap_{Site(Max)}$, and W is a real number equal or smaller than 100. For example, W equals to 90 or 100. At time point t2, the value of the current I'(t2) is a sum of the value of the current I1'(t2) for the other building loads 208 and the value of the current I2'(t2) for the EVSEs 204(1) to 204(m). Additionally, the value Df'(t2) represents the difference between the maximum site capacity $Cap_{Site(Max)}$ of the main incoming from grid 206 and the value of the current I'(t2), which is the value of W% of the maximum site capacity $Cap_{Site(Max)}$. In FIG. 3B, the area 227 corresponding to the value Df' above the line 230 indicates the unused capacity, which is smaller than the area 226 of FIG. 2B.

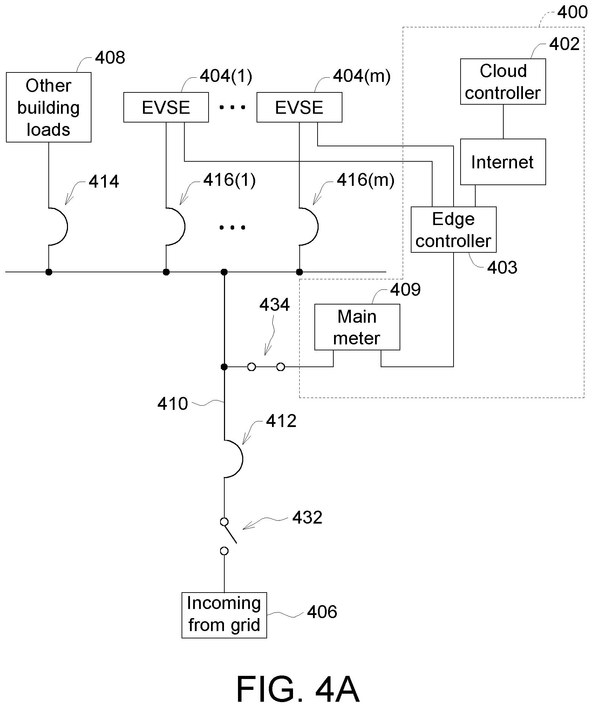

Referring to FIG. 4A, FIG. 4A shows a block diagram of a system for charging at least one EV at an electric vehicle charging station equipped with a number of EVSEs according to an embodiment of the disclosure. The system 400 includes a cloud controller 402 and an edge controller 403. The cloud controller 402 is configured to perform a normal charging procedure on the EVSEs 404(1) to 404(m) to charge at least one EV by the EVSEs 404(1) to 404(m) under the control of the cloud controller 402. DLM is inactive during the normal charging procedure. The normal charging procedure can be smart charging at cloud or normal smart charging by cloud controller, for example. The mark "404" can represent any EVSE of the EVSEs 404(1) to 404(m).

The edge controller 403 is configured to perform the following procedures. Whether a total load corresponding to a first time point is equal to or larger than a trigger threshold during the normal charging procedure is determined. The total load corresponds to a first load of other building loads 408 and a second load of the EVSEs 404(1) to 404(m), and the other building loads and the EVSEs 404(1) to 404(m) are provided with power through a power line 410 from the main incoming from grid 406. When the total load corresponding to the first time point is equal to or larger than the trigger threshold during the normal charging procedure, DLM is activated to charge the at least one EV by the EVSEs 404(1) to 404(m) under the control of the edge controller 403. Whether a gradient of the total load corresponding to a second time point reaches a gradient threshold during activated DLM is determined. When the gradient of the total load at the second time point reaches the gradient threshold during activated DLM, the charging capacity of each EVSE is adjusted based on an available EV charging capacity corresponding to the second time point.

The system 400 can further include a main meter 409. The main meter 409 is configured to measure a current or power of the power line 410 and obtain a main meter data when the at least one EV is charged by the EVSEs 404(1) to 404(m). Whether the total load corresponding to the first time point is equal to or larger than the trigger threshold during the normal charging procedure is determined according to the obtained main meter data at the first time point from the main meter 409. Whether the gradient of the total load corresponding to the second time point reaches the gradient threshold during activated DLM is determined according to the obtained main meter data at the second time point from the main meter 409. Whether the total load corresponding to the third time point is equal to or larger than the trigger threshold during activated DLM is determined according to the obtained main meter data at the third time point from the main meter 409.

A breaker 412 is electrically connected to the power line 410. A breaker 414 is electrically connected to the other building loads 408. Beakers 416(1) to 416(m) are electrically connected to the EVSEs 404(1) to 404(m), respectively. These breakers are used to protect the associated component from damage due to overcurrent. A switch 434 can be used and connected to the main meter 409, and another switch 432 can be used and connected to the main incoming from grid 406.

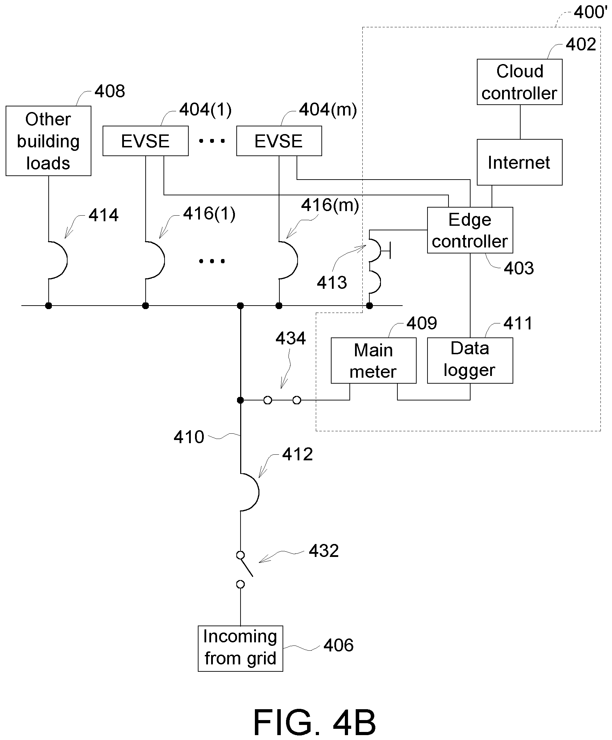

Referring to FIG. 4B, FIG. 4B shows another block diagram of a system for charging EVs at an electric vehicle charging station equipped with a number of EVSEs according to an embodiment of the disclosure. In comparison to system 400 of FIG. 4A, system 400' of FIG. 4B additionally includes a data logger 411 and an outlet 413. The data logger 411 is used to store the main meter data obtained from the main meter 409. The outlet 413 is used to supply power to other devices when needed.

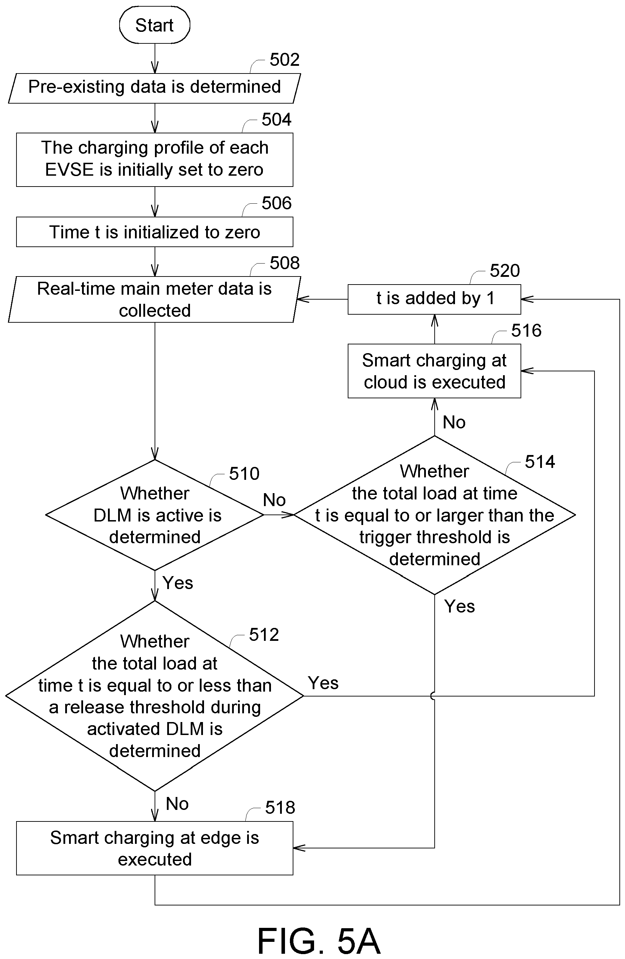

Referring to FIG. 5A, FIG. 5A shows a flowchart for activating DLM corresponding to the steps 102 to 106 of FIG. 1A and FIG. 1B. In step 502, pre-existing data is determined. The pre-existing data includes maximum site capacity $Cap_{Site(Max)}$ of the main incoming from grid, number of EVSEs in use, and maximum charging capacity of each EVSE, for example.

Then, in step 504, the charging profile of each EVSE is initially set to zero, resulting in no current being provided by any EVSE. In step 506, time t is initialized to zero. Then, step 508 is executed, and real-time main meter data is collected from the main meter 409 at time t with fixed time interval. Following this, whether DLM is active is determined in step 510. If DLM is active, the method proceeds to step 512; otherwise, the method moves to step 514.

In step 514, whether the total load at time t is equal to or larger than the trigger threshold is determined. If yes, step 518 is entered; otherwise, step 516 is entered. In step 514, the determination is made during normal charging procedure when DLM is not active. The total load corresponds to the first load of the other building loads 408 and the second load of the EVSEs 404(1) to 404(m), and the other building loads 408 and the EVSEs 404(1) to 404(m) receive power from the main incoming from grid 406 via the power line 410, as described in step 104.

In step 516, smart charging at cloud is executed. This involves performing a normal charging procedure to charge at least one EV by the EVSEs 404(1) to 404(m) under the control of the cloud controller 402, as described in step 102. During the normal charging procedure, DLM remains inactive. After step 516, step 520 is entered, and t is added by 1. After step 520, the method goes back to step 508. Initially, step 520 may be skipped after step 516.

In step 518, smart charging at edge is executed. This occurs when the total load at time t is equal to or larger than the trigger threshold during the normal charging procedure as determined in step 514. In step 518, DLM is activated to charge the at least one EV by the EVSEs 404(1) to 404(m) under the control of the edge controller 403, as described in step 106. After step 518, step 520 is entered, and t is added by 1. After step 520, the method goes back to step 508.

In step 512, whether the total load at time t is equal to or less than a release threshold during activated DLM is determined. If yes, step 516 is entered; otherwise, step 518 is executed. When the total load at time t is equal to or less than the release threshold during activated DLM, step 516 is entered, DLM is deactivated, and the normal charging procedure is restarted to charge the at least one EV by the EVSEs 404(1) to 404(m) under the control of the cloud controller 403. The release threshold is lower than the trigger threshold, and the trigger threshold is lower than the maximum site capacity $Cap_{Site(Max)}$ of the main incoming from grid 406.

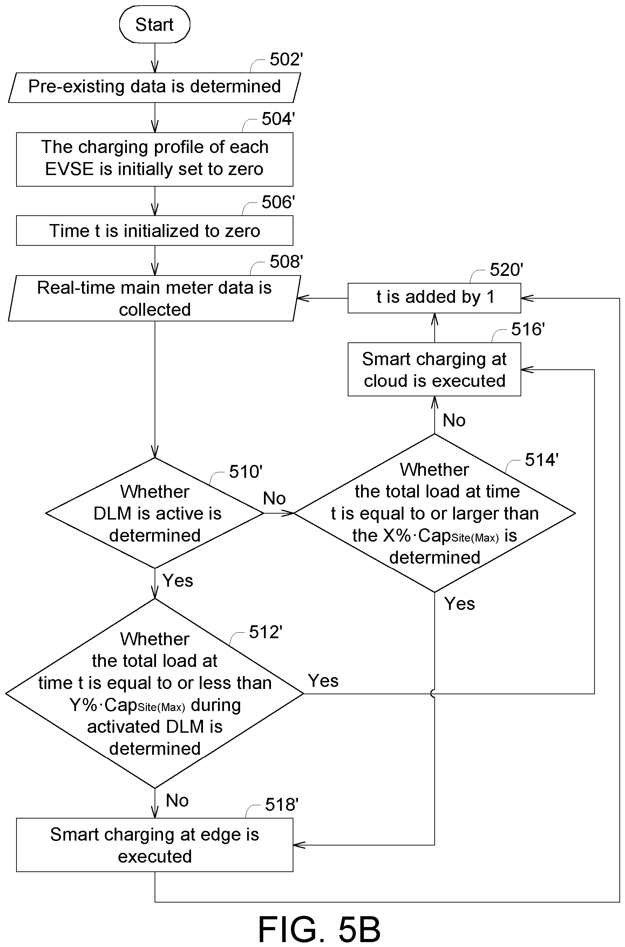

Referring to FIG. 5B, FIG. 5B shows another flowchart for activating DLM corresponding to steps 102 to 106 of FIG. 1A and FIG. 1B. The difference between FIG. 5B and FIG. 5A lies in setting the trigger threshold in step 514 as X% of the maximum site capacity $Cap_{Site(Max)}$ in step 514', and setting the release threshold in step 512 as Y% of the maximum site capacity $Cap_{Site(Max)}$ in step 512', where X and Y are real numbers less than 100. The steps 502' to 510' and steps 516' to 520' in FIG. 5B are similar to the steps 502 to 510 and steps 516 to 520 in FIG. 5A, and will not be repeated here. In some embodiment, the trigger threshold in step 514 can be set as X% of the maximum power capacity of a target building power system.

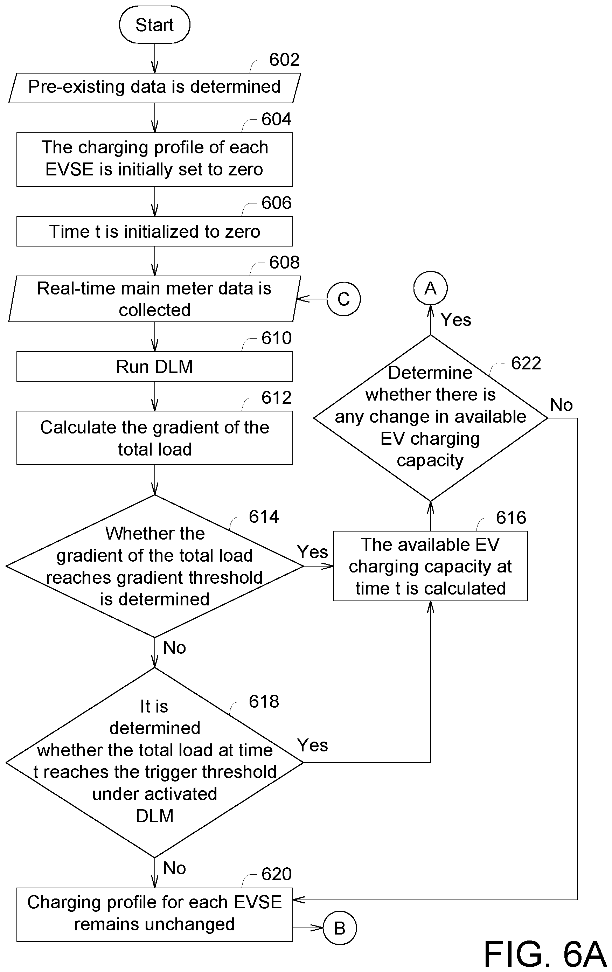

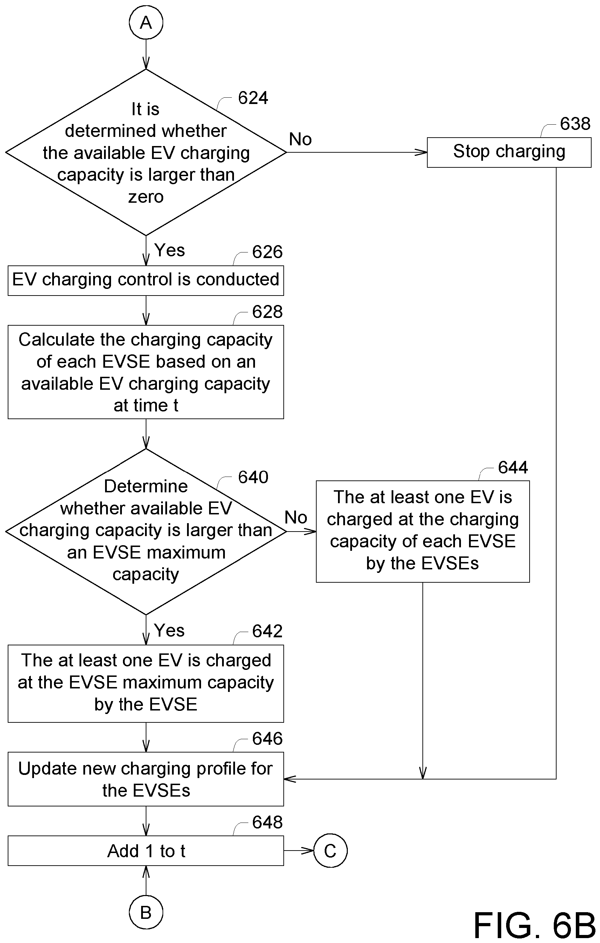

Referring to FIG. 6A and FIG. 6B, FIG. 6A and FIG. 6B show a flowchart for the processes of charging control corresponding to the steps 108 to 114 of FIG. 1A and FIG. 1B. The processes of charging control in FIG. 6A and FIG. 6B are performed when DLM is activated to charge the at least one EV by the EVSEs 404(1) to 404(m) under the control of the edge controller 403, after it is determined that the total load is equal or larger than the trigger threshold during the normal charging procedure, as described in step 106.

In step 602, pre-existing data is determined. The pre-existing data includes maximum site capacity $Cap_{Site(Max)}$ of the main incoming from grid 406, number of EVSEs in use, and maximum charging capacity of each EVSE 404, for example. Then, in step 604, the charging profile of each EVSE 404 is initially set to zero, resulting in no current being provided by any EVSE 404. In step 606, time t is initialized to zero.

After that, step 608 is entered, and real-time main meter data is collected from the main meter 409 at time t with fixed time interval. Following this, step 610 is performed to run DLM. Then, step 612 is entered to calculate the gradient of the total load and proceed to step 614. In step 614, whether the gradient of the total load reaches the gradient threshold is determined. If yes, step 616 is entered; otherwise, step 618 is entered. In step 616, the available EV charging capacity at time t is calculated. In step 618, it is determined whether the total load at time t reaches the trigger threshold under activated DLM. That is, it is determined whether the total load at time t reaches the trigger threshold under activated DLM. If yes, step 616 is entered; otherwise, step 620 is entered. In step 616, the available EV charging capacity at time t is calculated. In step 620, charging profile for each EVSE remains unchanged.

After step 616, step 622 is performed to determine whether there is any change in the available EV charging capacity. If yes, step 624 is entered; otherwise, step 620 is entered. In step 624, it is determined whether the available EV charging capacity is larger than zero. If yes, step 626 is entered; otherwise, step 638 is entered to stop charging.

In step 626, EV charging control is conducted. Then, step 628 is entered to calculate the charging capacity of each EVSE based on an available EV charging capacity at time t by the edge controller 403. After that, step 640 is entered to determine whether the available EV charging capacity is larger than an EVSE maximum capacity. If yes, step 642 is entered; otherwise, step 644 is entered.

In step 642, the at least one EV is charged at the EVSE maximum capacity by the EVSE under the control of the edge controller. In step 644, the at least one EV is charged at the charging capacity of each EVSE by the EVSEs under the control of the edge controller 403. After that, step 646 is performed to update new charging profile for the EVSEs. Then, step 648 is entered to add 1 to t. After step 648, step 608 is repeated.

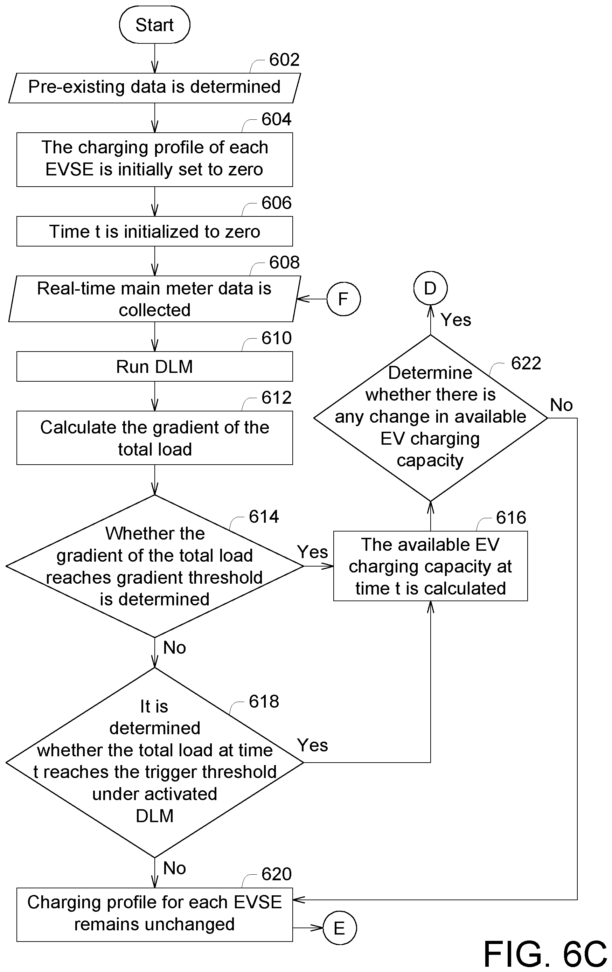

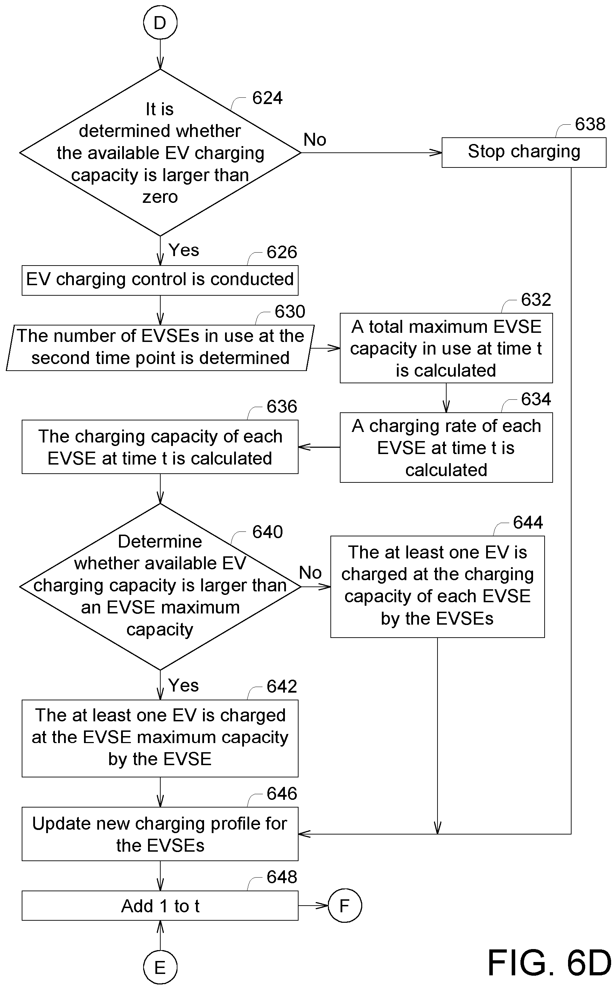

Referring to FIG. 6C and FIG. 6D, FIG. 6C and FIG. 6D show another flowchart for the processes of charging control corresponding to the steps 108 to 114 of FIG. 1A and FIG. 1B. The difference between FIG. 6D and FIG. 6B lies in that step 628 of FIG. 6B can be replaced by steps 630 to 636 of FIG. 6D, or step 628 of FIG. 6B can be implemented by steps 630 to 636 of FIG. 6D. Other steps of FIG. 6C and FIG. 6D are the same with corresponding steps of FIG. 6A and FIG. 6B, and will not be repeated here.

The processes of charging control in FIG. 6C and FIG. 6D are also performed when DLM is activated to charge the at least one EV by the EVSEs under the control of the edge controller 403, after it is determined that the total load is equal to or larger than the trigger threshold during the normal charging procedure, as described in step 106.

In step 630, the number of EVSEs in use at the second time point is determined. The number of EVSEs in use is represented by "n". Then, in step 632, a total maximum EVSE capacity in use at time t is calculated. After that, in step 634, a charging rate of each EVSE at time t is calculated. Then, in step 636, the charging capacity of each EVSE at time t is calculated based on the available EV charging capacity at time t and the charging rate of each EVSE at time t.

After the determination of step 640, step 644 is performed that the at least one EV in use is charged by the EVSEs with the calculated charging capacity of each EVSE. The charging rate of each EVSE at time t is proportional to a maximum charging capacity of corresponding EVSE.

When the determination in step 614 is no, in which the gradient of the total load does not reach gradient threshold, step 618 is entered, and it is determined whether the total load at time t is equal to or larger than the trigger threshold under activated DLM. Then, step 616 is performed to calculate the available EV charging capacity at time t. After that, the steps 622 and 624 are performed and then steps 626 to 636 are executed. That is to say, steps 616, 626, and 630 to 636 will be executed when the gradient of the total load is equal to or larger than the gradient threshold under activated DLM, or when the total load at time t is equal to or larger than the trigger threshold under activated DLM.

In step 612, the gradient of the total load, $\Delta$ Load$_{Total}$, can be calculated by comparing the total load at time t Load$_{Total}$ (t) with the total load at time t-1 Load$_{Total}$ (t-1) by the following equation, for example:

$$\Delta Load_{Total} = \frac{Load_{Total}(t) - Load_{Total}(t-1)}{\Delta t}$$

In step 614, whether the gradient of the total load reaches gradient threshold can be determined by checking whether $\Delta Total_{Load} \geq m(t)$, and checking whether $\Delta Total_{Load} \leq -m(t)$. When $\Delta Total\_Load \geq m(t)$ or $\Delta$ Total_Load $\leq$ -m(t), it is determined that the gradient of the total load reaches the gradient threshold, wherein m(t) is a positive gradient threshold and -m(t) is a negative gradient threshold. Whether the gradient of the total load reaches gradient threshold can be used as an update flag for charging profile of EVSEs.

In step 616, the available EV charging capacity Cap(t) at time t can be calculated by the following equation, for example:

$$Cap(t) = \min\big(Cap(t-1),\ Load_{Total}(t)\big) + (W\%\ Cap_{Site(Max)} - Load_{Total}(t))$$

W is real number equal or less than 100, and the value of W can be chosen according to site constraints. "CapSite(Max)" represents the maximum site capacity of the total load, which includes EVSE loads and other building loads of the site. Assuming W is set to be 90, the equation above can be rewritten as:

$$Cap(t) = \min\big(Cap(t-1),\ Load_{Total}(t)\big) + (90\%\ Cap_{Site(Max)} - Load_{Total}(t))$$

Alternatively, the available EV charging capacity Cap(t) at time t can be calculated by the following equation, for example:

$$Cap(t) = Cap(t-1) + (W\%\ Cap_{Site(Max)} - Load_{Total}(t))$$

Assuming W is set to be 90, the equation above can be rewritten as:

$$Cap(t) = Cap(t-1) + (90\% \, Cap_{Site(Max)} - Load_{Total}(t))$$

In step 632, the total maximum EVSE capacity, $EVSE_{Total(Max)}(n, t)$, for the EVSEs in use at time t can be calculated, for example, by the following equation, wherein "n" represents the number of EVSE in use:

$$EVSE_{Total(max)}(n,t) = \sum_{i=1}^{n} EVSE_{i(max)} \times (1 - EV_{state})$$

$EVSE_{i(Max)}$ is obtained in reference to the maximum current output rating of the EVSE brand or type for each EVSE. The value $EV_{state}$ equals to "1" when the battery of the corresponding EV is fully charged, and the value $EV_{state}$ equals to "0" when the battery of the corresponding EV is not fully charged.

In step 634, the charging rate of i-th EVSE, represented by Charging_Rate(i, t), for the EVSEs in use at time t can be, for example, calculated by the following equation, wherein i is an integer:

$$Charging\_Rate(i,t) = \frac{EVSE_{i(max)} \times (1 - EV_{state})}{EVSE_{Total(max)}(n,t)}$$

In step 636, the charging capacity for i-th EVSE in use at time t, represented by $Cap_{EVSE}(i, t)$, can be calculated, for example, by the following equation:

$$Cap_{EVSE}(i,t) = Charging\_Rate(i,t) \times Cap(t)$$

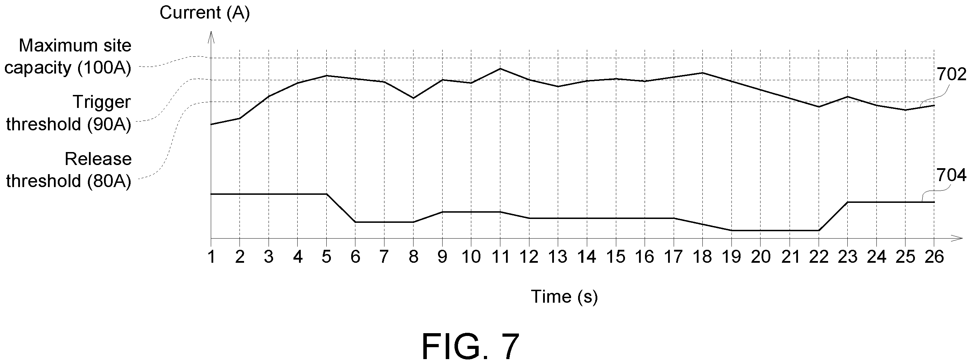

Referring to FIG. 7, an example of operating the method for charging EVs at an electric vehicle charging station equipped with a number of EVSEs according to an embodiment of the disclosure is illustrated. In the example of FIG. 7, it is assumed that the maximum site capacity is set as 100A, the trigger threshold is set as 90% of maximum site capacity (for example, 90A), and the release threshold is set as 80% of maximum site capacity (for example, 80A). Assume that the data read from the main meter is recorded at every 1 second. The condition for triggering charging profile update includes the condition when there is a minimum m A/s spike or -m A/s drop between time t-1 and time t. That is, the positive gradient threshold is set to m A/s, and the negative gradient threshold is set to -m A/s. When $\Delta$ Total_Load $\geq$ m(t) or $\Delta$Total_Load $\leq$ -m(t), it is determined that the gradient of the total load reaches the gradient threshold. In this example, assume that m equals to 5, and the positive trigger gradient is 5A/s and the negative trigger gradient is -5A/s. The condition for triggering charging profile update further includes the condition when the total load is more or equal to the trigger threshold.

The curve 702 represents the total load, and the curve 704 represents the EVSE load for EVSEs. It is assumed that the initial DLM status is inactive. At time t = 1 to 4, the total load is below the trigger threshold (e.g., 90A); therefore, DLM is inactive. At time t = 5, the total load exceeds the trigger threshold (e.g., 90A); therefore, DLM starts, and the charging profile of each EVSE is updated to decrease the EVSE charging current (i.e. the EVSE load) of each EVSE.

At time t = 6 to t = 7, the gradient of total load (time t-1 to time t) does not reach the gradient threshold, and therefore the EVSE charging current of each EVSE is unchanged. At time t = 8, the gradient of total load (time t-1 to time t) reaches the gradient threshold, and therefore the charging profile of each EVSE is updated to increase EVSE charging current of each EVSE.

At time t = 9 to 10, the gradient of total load (time t-1 to t) does not reach the gradient threshold, therefore the EVSE charging current (i.e., EVSE load) of each EVSE is unchanged. At time t = 11, the gradient of total load (time t-1 to t) reaches the gradient threshold, therefore the charging profile of each EVSE is updated to decrease EVSE charging current of each EVSE.

At time t = 12 to 16, the gradient of total load (time t-1 to t) does not reach gradient threshold. Therefore, the EVSE charging current is unchanged. At time t = 17, the total load exceeds the trigger threshold. Therefore, the charging profile of each EVSE is updated to decrease the EVSE charging current of each EVSE.

At time t = 18, the total load still exceeds the trigger threshold (i.e., the other building loads are still increasing), and the charging profile of each EVSE is updated again to decrease EVSE charging current of each EVSE. At time t = 19 to 21, the gradient of total load (time t-1 to t) does not reach the gradient threshold. Therefore, the EVSE charging current is unchanged.

At time t = 22, the total load drops below the release threshold (e.g. 80A), the normal charge procedure (for example, smart charging at cloud) takes over, and DLM is set to be inactive. At time t = 23 onwards, the total load is below the trigger threshold, and DLM is still inactive.

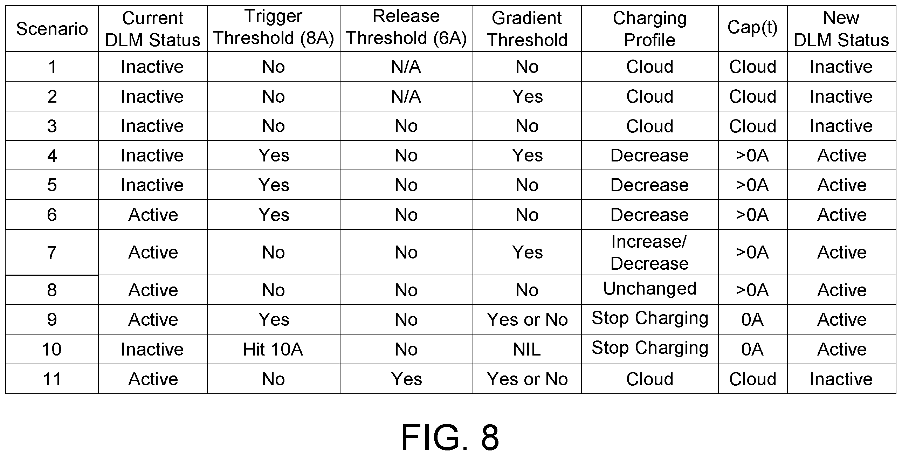

Referring to FIG. 8, FIG. 8 shows another example of operating the method for charging EVs at an electric vehicle charging station equipped with a number of EVSEs according to an embodiment of the disclosure. In the example of FIG. 8, conditions for DLM are assumed as follows. DLM is based on maximum site capacity 10A. When DLM is inactive, the trigger threshold is assumed to be 8A (80% of maximum site capacity 10A). EVSE current is limited based on the trigger threshold. When DLM is active, the release threshold is assumed to be 6A (60% of maximum site capacity 10A). Assume the positive gradient threshold is 1A/s, and negative gradient threshold is - 1A/s.

During active DLM, conditions for charging profile to be updated include the follows. When there is a minimum 1A/s (positive gradient threshold) spike between time t-1 and t, update of charging profile is triggered. When there is a minimum -1A/s drop between time t-1 and t, update of charging profile is triggered. When the total load is equal to or larger than the trigger threshold (for example, 8A), the charging profile is updated regardless of the gradient value of the total load, which results in EVSE available charging capacity reduction. When Total Load is equal to or larger than the maximum site capacity limit (for example, 10A, in this example), the charging profile is updated regardless of the gradient value of the total load, which results in that EVSE charging capacity is set to zero (i.e., stop charging).

As shown in FIG. 8, in scenario 1, the initial DLM status is inactive. Assume that the total load at time t is 1.008A, and the total load at time t-1 is 1.008A. DLM remains inactive as the trigger threshold (i.e., 8A) has not been met. The smart charging at cloud is performed and the charging capacity of each EVSE is provided by cloud.

In scenario 2, the initial DLM status is inactive. Assume that the total load at time t is 7.029A, and the total load at time t-1 is 5.597A. The gradient of the total load is 1.432A/s, which exceeds the gradient threshold (e.g., 1A/s). DLM remains inactive even if the gradient of the total load exceeds the gradient threshold (e.g., 1A/s or -1A/s) as the trigger threshold (i.e., 8A) has not been met. The smart charging at cloud is performed and the charging capacity of each EVSE is provided by cloud.

In scenario 3, the initial DLM status is inactive. Assume that the total load at time t is 6.878A, and the total load at time t-1 is 6.542A. Although the total load at time t is larger than the release threshold (e.g. 6A), DLM is still inactive as the trigger threshold (e.g., 8A) has not been met.

In scenario 4, the initial DLM status is inactive. Assume that the total load at time t is 8.047A, and the total load at time t-1 is 6.878A. The gradient of the total load is 1.169A/s, which exceeds the gradient threshold (e.g., 1A/s). DLM is now active as the trigger threshold is met and the charging profile of each EVSE is updated to be decreased.

In scenario 5, the initial DLM status is inactive. Assume that the total load at time t is 8.033A, and the total load at time t-1 is 7.549A. The gradient of the total load is 0.484A/s, which does not exceed the gradient threshold (e.g., 1A/s). DLM is active as the trigger threshold (e.g., 8A) is met and the charging profile of each EVSE is updated due to the total load reaching the trigger threshold, even though the gradient of the total load does not reach the gradient threshold.

In scenario 6, the initial DLM status is active. Assume that the total load at time t is 8.044A, and the total load at time t-1 is 8.047A. The gradient of the total load is -0.003A/s, which does not exceed the gradient threshold (e.g., 1A/s). DLM remains active as the release threshold (e.g., 6A) has not been met. In this scenario, the total load remains the same although the charging capacity of each EVSE decreased, which means that the other building loads are still increasing. Therefore, the charging profile of each EVSE is consistently updated to reduce charging capacity of each EVSE as long as the total load reaches the trigger threshold (e.g., 8A), even if the gradient of the total load does not reach the gradient threshold.

In scenario 7, the initial DLM status is active. Assume that the total load at time t is 6.525A, and the total load at time t-1 is 8.051A. The gradient of the total load is -1.526A/s, which reaches the gradient threshold (smaller than the negative gradient threshold, e.g., -1A/s). The new DLM status is still active as the release threshold (e.g., 6A) has not been met. The charging profile of each EVSE is updated due the gradient of the total load reaching the gradient threshold (e.g., -1A/s). That is, the available EV charging capacity Cap(t) is updated, the charging capacity for each EVSE is also updated, and the EVSE charging current is increased or decreased when the gradient of the total load decreases or increases, respectively.

In scenario 8, the initial DLM status is active. Assume that the total load at time t is 7.512A, and the total load at time t-1 is 8.046A. The gradient of the total load is -0.534A/s, which does not reach the gradient threshold (larger than the negative gradient threshold, e.g., -1A/s). DLM remains active as the release threshold (e.g., 6A) has not been met. Due the gradient of the total load not reaching the gradient threshold, the available EV charging capacity Cap(t) is not tabulated and the charging profile of each EVSE is not updated and remains unchanged.

In scenario 9, the initial DLM status is active. Assume that the total load at time t is 9.053A, and the total load at time t-1 is 9.018A. The gradient of the total load is 0.035A/s, which does not reach the gradient threshold (smaller than the positive gradient threshold, e.g., 1A/s). DLM remains active as the release threshold (e.g., 6A) has not been met. The charging profile is updated due the total load reaching the trigger threshold (e.g., 8A). The available EV charging capacity Cap(t) is updated, and is equal to or less than 0A, means stopped charging. EVSEs will not be responsible if the total load reaches the maximum site capacity.

In scenario 10, assume originally the total load at time t is 7.16A, and the total load at time t-1 is 5.03A, and DLM is currently inactive as the trigger threshold (e.g., 8A) has yet to be met. Assuming a sudden spike in the total load occurs afterward to reach maximum site capacity limit (for example, 10A, in this example), the charging profile of each EVSE is updated and the EVSEs automatically stop charging. The EVSEs are not responsible when the total load reaches the maximum site capacity.

In scenario 11, the initial DLM status is active. Assume that originally the total load at time t is 5.033A, and the total load at time t-1 is 10.058A. DLM is now inactive as the release threshold (e.g., 6A) has been met at time t. The sudden spike in the total load at time t-1 reaches the maximum site capacity (e.g., 10A), the charging profile of each EVSE is updated and the EVSEs automatically stop charging. The EVSEs are not responsible when the total load reaches the maximum site capacity. After that, since the total load at time t is 5.033A, DLM is inactive after time t as the release threshold (e.g., 6A) has been met. Then, the smart charging at cloud (normal charging procedure) restarts and the available EV charging capacity Cap(t) and the charging profile of each EVSE are provided by cloud.

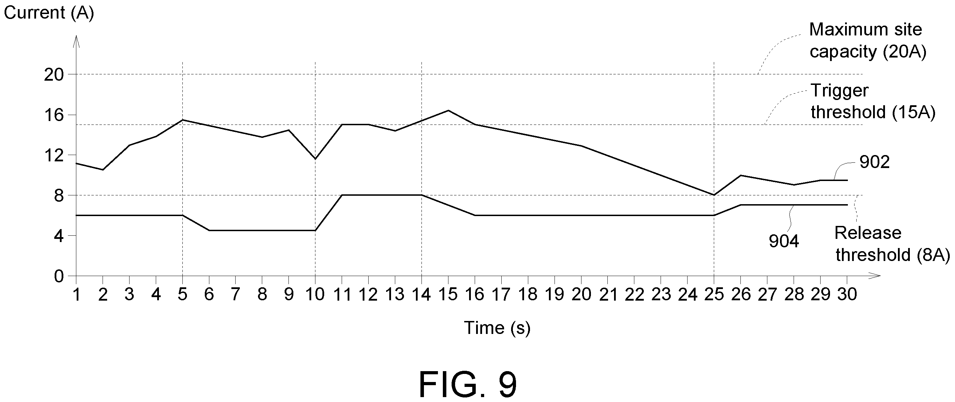

Referring to FIG. 9, a further example of operating the method for charging EVs at an electric vehicle charging station equipped with a number of EVSEs according to an embodiment of the disclosure is illustrated. In the example of FIG. 9, it is assumed that the maximum site capacity is 20A, the trigger threshold is set as 75% of maximum site capacity (15A), and the release threshold is set as 40% of maximum site capacity (8A). Assume that the data read from the main meter is recorded at every 1 second. The condition for triggering charging profile update includes the condition that when there is a minimum 1A/s spike or -1A/s drop between time t-1 and time t. That is, the positive gradient threshold is set to be 1A/s and the negative gradient threshold is set to be -1A/s. When $\Delta \text{Total\_Load} \geq 1\text{A/s}$ or $\Delta \text{Total\_Load} \leq -1\text{A/s}$, it is determined that the gradient of the total load reaches the gradient threshold. The condition for triggering charging profile update further includes that when total load is more or equals to the trigger threshold.

The curve 902 represents the total load, and the curve 904 represents the EVSE load for EVSEs. At time t = 5, the total load 902 exceeds the trigger threshold; therefore, DLM is active, and the charging profile of each EVSE is updated to decrease the EVSE charging current (i.e. the EVSE load) of each EVSE.

At time t = 10, the gradient of total load (time t-1 to time t) reaches the gradient threshold, and therefore the charging profile of each EVSE is updated to increase EVSE charging current of each EVSE. At time t = 14, the total load exceeds the trigger threshold, therefore, the charging profile of each EVSE is updated to decrease the EVSE charging current of each EVSE. At time t = 25, the total load drops below the release threshold, DLM is set to be inactive and the normal charge procedure takes over.

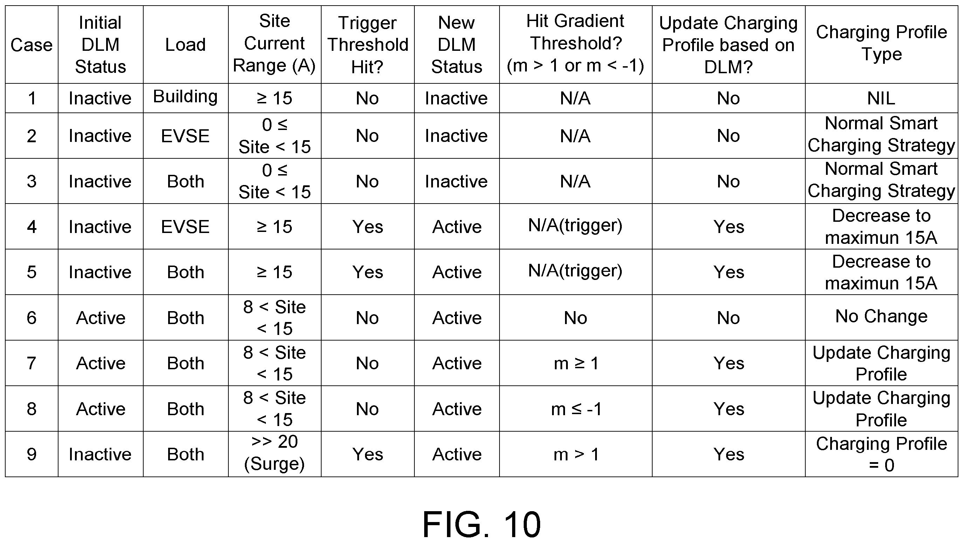

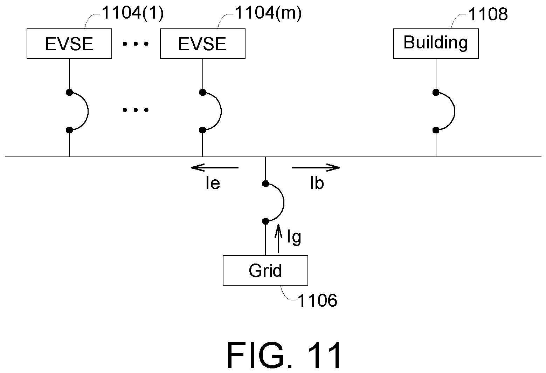

Referring to FIG. 10 and FIG. 11, FIG. 10 shows several cases based on the example in FIG. 9, and FIG. 11 shows a corresponding circuit for explaining the cases of FIG. 10. Current Ig represents the current outputted from the main incoming from grid 1106, current Ie represents the current inputted to the EVSEs 1104(1) to 1104(m), and current Ib represents the current inputted to the other building loads 1108.

In case 1, initial DLM status is inactive. All EVSEs are not in use. Current Ie is zero, current Ib is equal and larger than 15A, and current Ig is equal and larger than 15A. Since all EVSEs are not in use, even if Ig reaches the trigger threshold, the DLM will remain inactive.

In case 2, initial DLM status is inactive. Current Ie is between 0 and 15A, current Ib is zero, and current Ig is between 0 and 15A. Since the current Ig is smaller than 15A, the trigger threshold is not reached and DLM is still inactive. The charging profile type of the EVSEs is normal charging procedure controlled by cloud controller, for example, is normal smart charging strategy at cloud.

In case 3, initial DLM status is inactive. Current Ie is between 0 and 15A, current Ib is not zero, and current Ig is between 0 and 15A. Since the current Ig is smaller than 15A, the trigger threshold is not reached and DLM is still inactive. The charging profile type of the EVSEs is normal charging procedure controlled by cloud controller, for example, is normal smart charging strategy at cloud.

In case 4, initial DLM status is inactive. Current Ie is larger than 15A, current Ib is zero, and current Ig is larger than 15A. Since the current Ig is larger than 15A, the trigger threshold is reached and DLM is active. Regardless of whether the gradient threshold is reached, which is dependent on the total load at time t and time t-1, or otherwise, as the trigger threshold is met, the charging profile of each EVSE is updated, and current Ie is decreased to maximum site capacity 15A, for example.

In case 5, initial DLM status is inactive. Current Ie is larger than zero, current Ib is larger than zero, and current Ig is equal to or larger than 15A. Since the current Ig is equal to or larger than 15A, the trigger threshold is reached and DLM is active. Regardless of whether the gradient threshold is reached, which is dependent on the total load at time t and time t-1, or otherwise, the charging profile of each EVSE is updated and current Ie is decreased to maximum site capacity 15A, for example.

In case 6, initial DLM status is active. Current Ie is larger than zero, current Ib is larger than zero, and current Ig is between 8 and 15A. Since the current Ig is smaller than 15A, the trigger threshold is not reached, and DLM is still active. Assume the gradient threshold is not reached. Therefore, the charging profile of each EVSE is not changed.

In case 7, initial DLM status is active. Current Ie is larger than zero, current Ib is larger than zero, and current Ig is between 8 and 15A. Assume the gradient of Ig is equal to or larger than the positive gradient threshold (e.g., 1A/s) and the gradient threshold is reached. Since the trigger threshold is reached, the charging profile of each EVSE is updated.

In case 8, initial DLM status is active. Current Ie is larger than zero, current Ib is larger than zero, and current Ig is between 8 and 15A. Assume the gradient of Ig is equal or smaller than the negative gradient threshold (e.g., -1A/s) and the gradient threshold is reached. Since the gradient threshold is reached, the charging profile of each EVSE is updated.

In case 9, initial DLM status is inactive. Current Ie is larger than zero, current Ib is larger than zero, and current Ig is much larger than the maximum site capacity (e.g., 20A). Assume the gradient of Ig is larger than the positive gradient threshold (e.g., 1A/s) and the gradient threshold is reached. Since the current Ig is much larger than the maximum site capacity (e.g., 20A), the charging profile of each EVSE is set to be zero to prevent damage from overcurrent.

The method and system for EV at an electric vehicle charging station equipped with a number of EVSEs according to an embodiment of the disclosure can optimize the real-time distribution of EVSE loads, balance the EVSE loads effectively within available capacity, and reduce peak demand to prevent system overloads. The method and system are able to adjust the power allocation optimally in real-time across a number of EVSEs within the available capacity.

Besides, although the cloud controller may use prediction engine to predict the behavior of the load of EVSEs and assign charging profile to each EVSE, the edge controller can track the actual total load at local. When any behavior which causes the total load approaching the trigger threshold, the edge controller will take control and reassign charging profile to each EVSE. In addition, the edge controller provides a shorter latency compared to the cloud controller because the edge controller is nearer to the EVSEs.

Before EV is fully charged and total load is less than the trigger threshold, the charging profile will be taken care by the cloud controller, which may be implemented by a smart charging server. The cloud controller implemented by the smart charging server can consider more parameters as the smart charging server has more powerful computing capability. The edge controller which can be implemented by a normal computer, for example, considers lesser parameters as the edge controller has a limited computing ability.

It will be apparent to those skilled in the art that various modifications and variations can be made to the disclosed embodiments. It is intended that the specification and examples be considered as exemplars only, with a true scope of the disclosure being indicated by the following claims and their equivalents.

**Claims**

1.  A method for charging electric vehicle (EV) (220(1)~220(m)) at an electric vehicle charging station (202) equipped with a plurality of electric vehicle supply equipment (EVSE) (204(1)-204(m), 404(1)-404(m), 1104(1)~1104(m)), comprising:

    performing a normal charging procedure on the EVSEs (204(1)~204(m), 404(1)~404(m), 1104(1)~1104(m)) to charge at least one EV (220(1)~220(m)) by the EVSEs (204(1)~204(m), 404(1)~404(m), 1104(1)~1104(m)) under the control of a cloud controller (402), wherein dynamic load management (DLM) is inactive during the normal charging procedure;
    determining a first time point, which is referred to whether a total load is equal to or larger than a trigger threshold during the normal charging procedure, wherein the total load corresponds to a first load of other building loads (208, 408, 1108) and a second load of the EVSEs (204(1)~204(m), 404(1)~404(m), 1104(1)~1104(m)), and the other building loads (208, 408, 1108) and the EVSEs (204(1)~204(m), 404(1)~404(m), 1104(1)~1104(m)) receive power from main incoming from grid (206, 406, 1106) via a power line (210, 410);
    when the total load corresponding to the first time point is equal to or larger than the trigger threshold during the normal charging procedure, activating DLM to charge the at least one EV (220(1)~220(m)) by the EVSEs (204(1)~204(m), 404(1)~404(m), 1104(1)~1104(m)) under control of an edge controller (403);
    determining a second time point, which is referred to whether a gradient of the total load reaches a gradient threshold during activated DLM; and
    when the gradient of the total load at the second time point reaches the gradient threshold during activated DLM, adjusting the charging capacity of each EVSE (204(1)~204(m), 404(1)~404(m), 1104(1)~1104(m)) based on an available EV charging capacity corresponding to the second time point by the edge controller (403).

2.  The method according to claim 1, further comprising:

    determining a third time point, which is referred to whether the total load is equal to or larger than the trigger threshold during the active DLM period; and
    when the total load corresponding to the third time point is equal to or larger than the trigger threshold during activated DLM, adjusting the charging capacity of each EVSE (204(1)~204(m), 404(1)~404(m), 1104(1)~1104(m)) based on the available EV charging capacity corresponding to the third time point by the edge controller (403).

3. The method according to claim 2, wherein in the step of adjusting the charging capacity of each EVSE (204(1)~204(m), 404(1)~404(m), 1104(1)~1104(m)) based on the available EV charging capacity corresponding to the second time point by the edge controller (403), the charging capacity of each EVSE (204(1)~204(m), 404(1)~404(m), 1104(1)~1104(m)) is adjusted proportionally according to a maximum charging capacity of the corresponding EVSE (204(1)~204(m), 404(1)~404(m), 1104(1)~1104(m));

wherein in the step of adjusting the charging capacity of each EVSE (204(1)~204(m), 404(1)~404(m), 1104(1)~1104(m)) based on the available EV charging capacity corresponding to the third time point by the edge controller (403), the charging capacity of each EVSE (204(1)~204(m), 404(1)~404(m), 1104(1)~1104(m)) is adjusted proportionally according to the maximum charging capacity of the corresponding EVSE (204(1)~204(m), 404(1)~404(m), 1104(1)~1104(m)).

4. The method according to claim 2, further comprising:

obtaining a main meter data from a main meter (409) when the at least one EV (220(1)~220(m)) are charged by the EVSEs (204(1)~204(m), 404(1)~404(m), 1104(1)~1104(m));

wherein the first time point, which is referred to whether the total load is equal to or larger than the trigger threshold during the normal charging procedure, is determined according to the obtained main meter data at the first time point from the main meter (409), and the main meter (409) is configured to measure a current or power of the power line (210, 410);

wherein the second time point, which is referred to whether the gradient of the total load reaches the gradient threshold during activated DLM, is determined according to the obtained main meter data at the second time point from the main meter (409);

wherein whether the total load corresponding to the third time point is equal to or larger than the trigger threshold during activated DLM is determined according to the obtained main meter data at the third time point from the main meter (409).

5. The method according to claim 2, wherein the step of adjusting the charging capacity of each EVSE (204(1)~204(m), 404(1)~404(m), 1104(1)~1104(m)) based on the available EV charging capacity corresponding to the second time point or the third time point by the edge controller (403) comprises the following steps:

calculating the available EV charging capacity at the second time point or the third time point;
conducting EV charging control;
determining a number of EVSEs (204(1)~204(m), 404(1)~404(m), 1104(1)~1104(m)) in use at the second time point or the third time point;
calculating a total maximum EVSE capacity in use at the second time point or the third time point;
calculating a charging rate of each EVSE (204(1)~204(m), 404(1)~404(m), 1104(1)~1104(m)) at the second time point or the third time point;
calculating the charging capacity of each EVSE (204(1)~204(m), 404(1)~404(m), 1104(1)~1104(m)) at the second time point or the third time point based on the available EV charging capacity at the second time point or the third time point and the charging rate of each EVSE (204(1)~204(m), 404(1)~404(m), 1104(1)~1104(m)) at the second time point or the third time point; and
charging the at least one EV (220(1)~220(m)) in use by the EVSEs (204(1)~204(m), 404(1)~404(m), 1104(1)~1104(m)) with the calculated charging capacity of each EVSE (204(1)~204(m), 404(1)~404(m), 1104(1)~1104(m));

wherein the charging rate of each EVSE (204(1)~204(m), 404(1)~404(m), 1104(1)~1104(m)) at the second time point or the third time point is proportional to a maximum charging capacity of the corresponding EVSE (204(1)-204(m), 404(1)~404(m), 1104(1)~1104(m)).

6. The method according to claim 1, further comprising:

determining whether the total load corresponding to a fourth time point is equal to or less than a release threshold during activated DLM;

when the total load corresponding to the fourth time point is equal to or less than the release threshold during activated DLM, deactivating DLM and restarting the normal charging procedure to charge the at least one EV (220(1)~220(m)) by the EVSEs (204(1)~204(m), 404(1)~404(m), 1104(1)~1104(m)) under the control of the cloud controller (402);

wherein the release threshold is lower than the trigger threshold, the trigger threshold is lower than a maximum site capacity of the total load, which includes EVSE loads and other building loads (208, 408, 1108) of the site.

7. The method according to claim 1, wherein the main incoming from grid (206, 406, 1106) is coupled to a first breaker (212), the other building loads (208, 408, 1108) are coupled to a second breaker (214), and the EVSEs (204(1) ~204(m), 404(1)~404(m), 1104(1)~1104(m)) are coupled to a third breaker (216), the other building loads (208, 408, 1108) are coupled to the main incoming from grid (206, 406, 1106) through the first breaker (212) and the second breaker (214), and the EVSEs (204(1)~204(m), 404(1)~404(m), 1104(1)~1104(m)) are coupled to the main incoming from grid (206, 406, 1106) through the first breaker (212) and the third breaker (216).

8. The method according to claim 1, wherein the electric vehicle charging station (202) further include an EVSE distribution board (218) for electrical power distribution and safety of charging the EV (220(1)~220(m)) by the EVSEs (204(1)~204(m), 404(1)~404(m), 1104(1)~1104(m)).

9. The method according to claim 1, wherein a first breaker (412) is electrically connected to the power line (410), a second breaker (414) is electrically connected to the other building loads (408), a plurality of third beakers (416(1) ~416(m)) are electrically connected to the EVSEs (404(1)~404(m)) respectively, a first switch (434) is used and connected to a main meter (409), and a second switch (432) is used and connected to the main incoming from grid (406).

10. A system for charging EVs at an electric vehicle charging station (202) equipped with a plurality of EVSEs (204(1) ~204(m), 404(1)~404(m), 1104(1)~1104(m)), comprising:

   a cloud controller (402), configured to perform a normal charging procedure on the EVSEs (204(1)~204(m), 404(1)~404(m), 1104(1)-1104(m)) to charge at least one EV (220(1)~220(m)) by the EVSEs (204(1)~204(m), 404(1)~404(m), 1104(1)~1104(m)) under control of the cloud controller (402), wherein DLM is inactive during the normal charging procedure; and
   an edge controller (403), configured to perform the following procedures:

   determining a first time point, which is referred to whether a total load is equal to or larger than a trigger threshold during the normal charging procedure, wherein the total load corresponds to a first load of other building loads (208, 408, 1108) and a second load of the EVSEs (204(1)~204(m), 404(1)~404(m), 1104(1) ~1104(m)), and the other building loads (208, 408, 1108) and the EVSEs (204(1)~204(m), 404(1)~404(m), 1104(1)~1104(m)) receive power from main incoming from grid (206, 406, 1106) via a power line (210, 410); when the total load corresponding to the first time point is equal to or larger than the trigger threshold during the normal charging procedure, activating DLM to charge the at least one EV (220(1)~220(m)) by the EVSEs (204(1)~204(m), 404(1)~404(m), 1104(1)~1104(m)) under control of the edge controller (403); determining a second time point, which is referred to whether a gradient of the total load reaches a gradient threshold during activated DLM; and when the gradient of the total load at the second time point reaches the gradient threshold during activated DLM, adjusting the charging capacity of each EVSE (204(1)-204(m), 404(1)~404(m), 1104(1)~1104(m)) based on an available EV charging capacity corresponding to the second time point.

11. The system according to claim 10, wherein the edge controller (403) is further configured to perform the following procedures:

   determining a third time point, which is referred to whether the total load is equal to or larger than the trigger threshold during the active DLM period; and
   when the total load corresponding to the third time point is equal to or larger than the trigger threshold during activated DLM, adjusting the charging capacity of each EVSE (204(1)-204(m), 404(1)~404(m), 1104(1) ~1104(m)) based on the available EV charging capacity corresponding to the third time point.

12. The system according to claim 11, wherein in the procedure of adjusting the charging capacity of each EVSE (204(1) ~204(m), 404(1)~404(m), 1104(1)~1104(m)) based on the available EV charging capacity corresponding to the second time point by the edge controller (403), the charging capacity of each EVSE (204(1)~204(m), 404(1)~404(m), 1104(1)~1104(m)) is adjusted proportionally according to a maximum charging capacity of the corresponding EVSE (204(1)~204(m), 404(1)~404(m), 1104(1)~1104(m));
wherein in the procedure of adjusting the charging capacity of each EVSE (204(1)~204(m), 404(1)~404(m), 1104(1) ~1104(m)) based on the available EV charging capacity corresponding to the third time point by the edge controller (403), the charging capacity of each EVSE (204(1)~204(m), 404(1)~404(m), 1104(1)~1104(m)) is adjusted proportionally according to the maximum charging capacity of the corresponding EVSE (204(1)~204(m), 404(1)~404(m), 1104(1)~1104(m)).

13. The system according to claim 11, further comprising:

a main meter (409), configured to measure a current or power of the power line (210, 410) and obtain a main meter data when the at least one EV (220(1)~220(m)) are charged by the EVSEs (204(1)~204(m), 404(1)~404(m), 1104(1)~1104(m));

wherein the first time point, which is referred to whether the total load is equal to or larger than the trigger threshold during the normal charging procedure, is determined according to the obtained main meter data at the first time point from the main meter (409);

wherein the second time point, which is referred to whether the gradient of the total load reaches the gradient threshold during activated DLM, is determined according to the obtained main meter data at the second time point from the main meter (409);

wherein whether the total load corresponding to the third time point is equal to or larger than the trigger threshold during activated DLM is determined according to the obtained main meter data at the third time point from the main meter (409).

14. The system according to claim 11, wherein the procedure of adjusting the charging capacity of each EVSE (204(1) ~204(m), 404(1)~404(m), 1104(1)~1104(m)) based on the available EV charging capacity corresponding to the second time point or the third time point comprises the following procedures:

calculating the available EV charging capacity at the second time point or the third time point;

conducting EV charging control;

determining a number of EVSEs (204(1)~204(m), 404(1)~404(m), 1104(1)~1104(m)) in use at the second time point or the third time point;

calculating a total maximum EVSE (204(1)~204(m), 404(1)~404(m), 1104(1)~1104(m)) capacity in use at the second time point or the third time point;

calculating a charging rate of each EVSE (204(1)~204(m), 404(1)~404(m), 1104(1)~1104(m)) at the second time point or the third time point;

calculating the charging capacity of each EVSE (204(1)~204(m), 404(1)~404(m), 1104(1)~1104(m)) at the second time point or the third time point based on the available EV charging capacity at the second time point or the third time point and the charging rate of each EVSE (204(1)~204(m), 404(1)~404(m), 1104(1)~1104(m)) at the second time point or the third time point; and

charging the at least one EV (220(1)~220(m)) in use by the EVSEs (204(1)~204(m), 404(1)~404(m), 1104(1) ~1104(m)) with the calculated charging capacity of each EVSE (204(1)~204(m), 404(1)~404(m), 1104(1)~1104(m));

wherein the charging rate of each EVSE (204(1)~204(m), 404(1)~404(m), 1104(1)~1104(m)) at the second time point or the third time point is proportional to a maximum charging capacity of the corresponding EVSE (204(1)-204(m), 404(1)~404(m), 1104(1)~1104(m)).

15. The system according to claim 10, wherein the edge controller (403) is further configured to perform the following procedures:

determining whether the total load corresponding to a fourth time point is equal to or less than a release threshold during activated DLM;

when the total load corresponding to the fourth time point is equal to or less than the release threshold during activated DLM, deactivating DLM;

wherein the cloud controller (402) is further configured to restart the normal charging procedure to charge the at least one EV (220(1)~220(m)) by the EVSEs (204(1)~204(m), 404(1)~404(m), 1104(1)~1104(m)) under the control of the cloud controller (402) when the total load corresponding to the fourth time point is equal to or less than the release threshold during activated DLM;

wherein the release threshold is lower than the trigger threshold, the trigger threshold is lower than a maximum site capacity of the total load, which includes the EVSE loads and other building loads (208, 408, 1108) of the site.

16. The system according to claim 10, wherein the main incoming from grid (206, 406, 1106) is coupled to a first breaker (212), the other building loads (208, 408, 1108) are coupled to a second breaker (214), and the EVSEs (204(1) ~204(m), 404(1)~404(m), 1104(1)~1104(m)) are coupled to a third breaker (216), the other building loads (208, 408, 1108) are coupled to the main incoming from grid (206, 406, 1106) through the first breaker (212) and the second breaker (214), and the EVSEs (204(1)~204(m), 404(1)~404(m), 1104(1)~1104(m)) are coupled to the main incoming from grid (206, 406, 1106) through the first breaker (212) and the third breaker (216).

17. The system according to claim 10, wherein the electric vehicle charging station (202) further include an EVSE distribution board (218) for electrical power distribution and safety of charging the EVs (220(1)~220(m)) by the EVSEs (204(1)~204(m), 404(1)~404(m), 1104(1)~1104(m)).

18. The system according to claim 10, wherein a first breaker (412) is electrically connected to the power line (410), a second breaker (414) is electrically connected to the other building loads (408), a plurality of third beakers (416(1) ~416(m)) are electrically connected to the EVSEs (404(1)~404(m)) respectively, a first switch (434) is used and connected to a main meter (409), and a second switch (432) is used and connected to the main incoming from grid (406).

Start

/—102

A normal charging procedure is performed on the
EVSEs to charge at least one EV by the EVSEs under
the control of a cloud controller

/—104

The first time point, which is referred to whether the
total load is equal to or larger than a trigger threshold
during the normal charging procedure, is determined

/—106

When the total load, corresponding to the first time
point, is equal to or larger than the trigger threshold
during the normal charging procedure, DLM is
activated to charge the at least one EV by the EVSEs
under the control of an edge controller

/—108

The second time point, which is referred to whether a
gradient of the total load reaches a gradient threshold
during activated DLM, is determined

/—110

When the gradient of the total load at the second time
point reaches the gradient threshold during activated
DLM, the charging capacity of each EVSE is adjusted
based on an available EV charging capacity
corresponding to the second time point by the edge
controller

End

# FIG. 1A

Start

102

A normal charging procedure is performed on the EVSEs to charge at least one EV by the EVSEs under the control of a cloud controller

104

Whether a total load corresponding to a first time point is equal or larger than a trigger threshold during the normal charging procedure is determined

106

When the total load corresponding to the first time point is equal or larger than the trigger threshold during the normal charging procedure, DLM is activated to charge the at least one EV by the EVSEs under the control of an edge controller

108

Whether a gradient of the total load corresponding to a second time point reaches a gradient threshold during activated DLM is determined

110

When the gradient of the total load at the second time point reaches the gradient threshold during activated DLM, the charging capacity of each EVSE is adjusted based on an available EV charging capacity corresponding to the second time point by the edge controller

112

The third time point, which is referred to whether the total load is equal to or larger than the trigger threshold during the active DLM period, is determined

114

When the total load corresponding to the third time point is equal or larger than the trigger threshold during activated DLM, the charging capacity of each EVSE is adjusted based on the available EV charging capacity corresponding to the third time point by the edge controller

End

FIG. 1B

FIG. 2A

FIG. 2B

EP 4 552 915 A1

Overall site/building

206 Incoming from grid

210 I'

212 First breaker

214 Second breaker

I1'

I2'

208 Other building loads

207(1) Electrical device

207(2) Electrical device

202

218 EVSE distribution board

216 Third breaker

204(1) EVSE 220(1)

204(2) EVSE 220(2)

204(3) EVSE 220(3)

204(4) EVSE 220(4)

204(m) EVSE 220(m)

**FIG. 3A**

EP 4 552 915 A1

FIG. 3B

$Cap_{site(max)}$

$W\% \cdot Cap_{site(max)}$

Current

227

230

228

$Df(t2)$

$I2'(t2)$

$I'(t2)$

$I1'(t2)$

t2

t

FIG. 4A

FIG. 4B

```
                         ┌─────────┐
                         │  Start  │
                         └─────────┘
                              │
                              ▼              502
              ╱──────────────────────────────╱
             ╱ Pre-existing data is determined ╱
            ╱──────────────────────────────╱
                              │
                              ▼              504
              ┌──────────────────────────────┐
              │     The charging profile of each  │
              │    EVSE is initially set to zero   │
              └──────────────────────────────┘
                              │
                              ▼              506
              ┌──────────────────────────────┐
              │     Time t is initialized to zero   │
              └──────────────────────────────┘
                              │
                              ▼              508                    520
              ╱──────────────────────────╱          ┌──────────────────────────┐
             ╱  Real-time main meter data is ╱  ◄──── │      t is added by 1        │ ◄───
            ╱         collected           ╱          └──────────────────────────┘
            ╱──────────────────────────╱                         ▲
                              │                                   │         516
                              │                       ┌──────────────────────────┐
                              │                       │    Smart charging at       │ ◄──
                              │                       │    cloud is executed       │
                              │                       └──────────────────────────┘
                              │                                   ▲
                              │                                   │ No
                              ▼              510                           514
                        ╱─────────╲                        ╱───────────────╲
                       ╱  Whether   ╲        No          ╱     Whether        ╲
                      ╱  DLM is active is ╲ ──────────► ╱ the total load at time ╲
                       ╲  determined     ╱             ╲ t is equal to or larger than the ╱
                        ╲───────────╱                   ╲  trigger threshold is   ╱
                              │                          ╲   determined        ╱
                            Yes                           ╲───────────────╱
                              │                                   │
                              ▼              512                  Yes
                        ╱───────────╲                             │
                       ╱   Whether     ╲                          │
                      ╱ the total load at ╲      Yes               │
                     ╱ time t is equal to or less than ╲ ────────┤
                      ╲ a release threshold during  ╱            │
                       ╲ activated DLM is        ╱               │
                        ╲  determined          ╱                 │
                         ╲───────────╱                           │
                              │ No           518                 │
                              ▼                                  │
              ┌──────────────────────────────┐                 │
              │   Smart charging at edge is     │ ◄──────────────┘
              │         executed              │
              └──────────────────────────────┘
                              │
                              └──────────────────────────────────────►
```

# FIG. 5A

Start

Pre-existing data is determined — 502'

The charging profile of each EVSE is initially set to zero — 504'

Time t is initialized to zero — 506'

Real-time main meter data is collected — 508'

Whether DLM is active is determined — 510'

No →

Whether the total load at time t is equal to or larger than the $X\% \cdot Cap_{Site(Max)}$ is determined — 514'

No → Smart charging at cloud is executed — 516'

t is added by 1 — 520'

Yes

Whether the total load at time t is equal to or less than $Y\% \cdot Cap_{Site(Max)}$ during activated DLM is determined — 512'

Yes

No → Smart charging at edge is executed — 518'

## FIG. 5B

Start

602
Pre-existing data is determined

604
The charging profile of each
EVSE is initially set to zero

606
Time t is initialized to zero

608
Real-time main meter data is
collected ◄— C

610
Run DLM

612
Calculate the gradient of the
total load

A

614
Whether the
gradient of the total load
reaches gradient threshold
is determined ——Yes→

622
Determine
whether there is
any change in available
EV charging
capacity —No→

Yes↑

616
The available EV
charging capacity at
time t is calculated

No

618
It is
determined
whether the total load at time
t reaches the trigger threshold
under activated
DLM ——Yes→

No

620
Charging profile for each EVSE
remains unchanged ◄——

B

FIG. 6A

A

It is
determined whether
the available EV charging
capacity is larger than
zero
— 624

No → Stop charging — 638

Yes — 626

EV charging control is conducted

— 628

Calculate the charging capacity
of each EVSE based on an
available EV charging capacity
at time t

Determine
whether available EV
charging capacity is larger than
an EVSE maximum
capacity
— 640

No → The at least one EV is
charged at the charging
capacity of each EVSE
by the EVSEs — 644

Yes — 642

The at least one EV is charged
at the EVSE maximum capacity
by the EVSE

— 646

Update new charging profile for
the EVSEs

— 648

Add 1 to t → C

B

FIG. 6B

Start

602

Pre-existing data is determined

604

The charging profile of each
EVSE is initially set to zero

606

Time t is initialized to zero

608

Real-time main meter data is
collected

F

610

Run DLM

612

Calculate the gradient of the
total load

614

Whether the
gradient of the total load
reaches gradient threshold
is determined

No

618

It is
determined
whether the total load at time
t reaches the trigger threshold
under activated
DLM

No

620

Charging profile for each EVSE
remains unchanged

D

Yes

622

Determine
whether there is
any change in available
EV charging
capacity

No

Yes

616

The available EV
charging capacity at
time t is calculated

Yes

E

FIG. 6C

(D)

It is determined whether the available EV charging capacity is larger than zero ⌐ 624

No → Stop charging ⌐ 638

Yes ⌐ 626

EV charging control is conducted

⌐ 630
The number of EVSEs in use at the second time point is determined

⌐ 632
A total maximum EVSE capacity in use at time t is calculated

⌐ 634
A charging rate of each EVSE at time t is calculated

⌐ 636
The charging capacity of each EVSE at time t is calculated

Determine whether available EV charging capacity is larger than an EVSE maximum capacity ⌐ 640

No → The at least one EV is charged at the charging capacity of each EVSE by the EVSEs ⌐ 644

Yes ⌐ 642

The at least one EV is charged at the EVSE maximum capacity by the EVSE

⌐ 646
Update new charging profile for the EVSEs

⌐ 648
Add 1 to t → (F)

(E)

FIG. 6D

FIG. 7

| Scenario | Current DLM Status | Trigger Threshold (8A) | Release Threshold (6A) | Gradient Threshold | Charging Profile | Cap(t) | New DLM Status |
|---|---|---|---|---|---|---|---|
| 1 | Inactive | No | N/A | No | Cloud | Cloud | Inactive |
| 2 | Inactive | No | N/A | Yes | Cloud | Cloud | Inactive |
| 3 | Inactive | No | No | No | Cloud | Cloud | Inactive |
| 4 | Inactive | Yes | No | Yes | Decrease | >0A | Active |
| 5 | Inactive | Yes | No | No | Decrease | >0A | Active |
| 6 | Active | Yes | No | No | Decrease | >0A | Active |
| 7 | Active | No | No | Yes | Increase/ Decrease | >0A | Active |
| 8 | Active | No | No | No | Unchanged | >0A | Active |
| 9 | Active | Yes | No | Yes or No | Stop Charging | 0A | Active |
| 10 | Inactive | Hit 10A | No | NIL | Stop Charging | 0A | Active |
| 11 | Active | No | Yes | Yes or No | Cloud | Cloud | Inactive |

FIG. 8

FIG. 9

| Case | Initial DLM Status | Load | Site Current Range (A) | Trigger Threshold Hit? | New DLM Status | Hit Gradient Threshold? (m > 1 or m < -1) | Update Charging Profile based on DLM? | Charging Profile Type |
|---|---|---|---|---|---|---|---|---|
| 1 | Inactive | Building | ≥ 15 | No | Inactive | N/A | No | NIL |
| 2 | Inactive | EVSE | 0 ≤ Site < 15 | No | Inactive | N/A | No | Normal Smart Charging Strategy |
| 3 | Inactive | Both | 0 ≤ Site < 15 | No | Inactive | N/A | No | Normal Smart Charging Strategy |
| 4 | Inactive | EVSE | ≥ 15 | Yes | Active | N/A(trigger) | Yes | Decrease to maximun 15A |
| 5 | Inactive | Both | ≥ 15 | Yes | Active | N/A(trigger) | Yes | Decrease to maximun 15A |
| 6 | Active | Both | 8 < Site < 15 | No | Active | No | No | No Change |
| 7 | Active | Both | 8 < Site < 15 | No | Active | m ≥ 1 | Yes | Update Charging Profile |
| 8 | Active | Both | 8 < Site < 15 | No | Active | m ≤ -1 | Yes | Update Charging Profile |
| 9 | Inactive | Both | >> 20 (Surge) | Yes | Active | m > 1 | Yes | Charging Profile = 0 |

FIG. 10

FIG. 11

# EP 4 552 915 A1

<table>
<tr><td colspan="2">Europäisches Patentamt<br>European Patent Office<br>Office européen des brevets</td><td>EUROPEAN SEARCH REPORT</td><td>Application Number<br><br>EP 24 20 7271</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 8 509 976 B2 (KEMPTON WILLETT [US]; UNIV DELAWARE [US]) 13 August 2013 (2013-08-13) | 1,6-10, 15-18 | INV. B60L53/63 B60L53/66 |
| A | * column 3 - column 23; claims 1-37; figures 1-13 * | 2-5, 11-14 | B60L53/67 B60L53/68 H02J7/00 |
| Y | WO 2023/016655 A1 (HITACHI ENERGY SWITZERLAND AG [CH]) 16 February 2023 (2023-02-16) | 1,6-10, 15-18 | B60L53/62 H02J3/14 H02J3/26 |
| A | * page 8 - page 30; claims 1-20; figures 1-5 * | 2-5, 11-14 | H02J3/32 |
| A | US 11 784 491 B1 (EWING ANDREW [CA] ET AL) 10 October 2023 (2023-10-10) * column 7 - column 29; claims 1-23; figures 1-13 * | 1-18 | |
| A | US 2020/023747 A1 (LOGVINOV OLEG [US] ET AL) 23 January 2020 (2020-01-23) * paragraph [0062] - paragraph [0135]; claims 1-37; figures 3-5 * | 1-18 | |
| A | US 10 836 275 B2 (HUMMINGBIRDEV [US]) 17 November 2020 (2020-11-17) * column 6 - column 37; claims 1-23; figures 1-10 * | 1-18 | TECHNICAL FIELDS SEARCHED (IPC)<br><br>B60L<br>H02J |

The present search report has been drawn up for all claims

| Place of search | Date of completion of the search | Examiner |
|---|---|---|
| The Hague | 20 March 2025 | Koutsorodis, Dafni |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 7271

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2025

| Patent document cited in search report | Publication date | Patent family member(s) | | Publication date |
|---|---|---|---|---|
| US 8509976 B2 | 13-08-2013 | CN | 102792547 A | 21-11-2012 |
| | | CN | 102844957 A | 26-12-2012 |
| | | CN | 102859827 A | 02-01-2013 |
| | | DK | 2537224 T3 | 21-09-2020 |
| | | DK | 3826134 T3 | 24-10-2022 |
| | | DK | 4033632 T3 | 02-01-2024 |
| | | DK | 4106138 T3 | 08-07-2024 |
| | | EP | 2537224 A1 | 26-12-2012 |
| | | EP | 2537225 A1 | 26-12-2012 |
| | | EP | 2537226 A1 | 26-12-2012 |
| | | EP | 3826134 A1 | 26-05-2021 |
| | | EP | 4033632 A1 | 27-07-2022 |
| | | EP | 4106138 A1 | 21-12-2022 |
| | | EP | 4311715 A2 | 31-01-2024 |
| | | ES | 2825709 T3 | 17-05-2021 |
| | | ES | 2928192 T3 | 16-11-2022 |
| | | ES | 2966072 T3 | 18-04-2024 |
| | | ES | 2981620 T3 | 10-10-2024 |
| | | FI | 4033632 T3 | 08-01-2024 |
| | | FI | 4106138 T3 | 24-07-2024 |
| | | JP | 5905836 B2 | 20-04-2016 |
| | | JP | 6034198 B2 | 30-11-2016 |
| | | JP | 2013520942 A | 06-06-2013 |
| | | JP | 2013520943 A | 06-06-2013 |
| | | JP | 2013523058 A | 13-06-2013 |
| | | KR | 20120135509 A | 14-12-2012 |
| | | KR | 20130006453 A | 16-01-2013 |
| | | KR | 20130028068 A | 18-03-2013 |
| | | PL | 2537224 T3 | 19-07-2021 |
| | | PL | 2537226 T3 | 31-10-2022 |
| | | PL | 3826134 T3 | 28-11-2022 |
| | | PL | 4033632 T3 | 11-03-2024 |
| | | PL | 4106138 T3 | 19-08-2024 |
| | | PT | 2537224 T | 20-10-2020 |
| | | PT | 2537226 T | 29-03-2022 |
| | | PT | 3826134 T | 04-10-2022 |
| | | PT | 4033632 T | 21-11-2023 |
| | | PT | 4106138 T | 16-07-2024 |
| | | US | 2011202192 A1 | 18-08-2011 |
| | | US | 2011202217 A1 | 18-08-2011 |
| | | US | 2011202418 A1 | 18-08-2011 |
| | | WO | 2011102855 A1 | 25-08-2011 |
| | | WO | 2011102856 A1 | 25-08-2011 |
| | | WO | 2011102857 A1 | 25-08-2011 |
| WO 2023016655 A1 | 16-02-2023 | AU | 2021460192 A1 | 29-02-2024 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 24 20 7271

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2025

| Patent document cited in search report | | | Publication date | Patent family member(s) | | Publication date |
|---|---|---|---|---|---|---|
| | | | | CA | 3227764 A1 | 16-02-2023 |
| | | | | CN | 117794776 A | 29-03-2024 |
| | | | | EP | 4384412 A1 | 19-06-2024 |
| | | | | JP | 2024530679 A | 23-08-2024 |
| | | | | US | 2024375537 A1 | 14-11-2024 |
| | | | | WO | 2023016655 A1 | 16-02-2023 |
| US 11784491 | B1 | 10-10-2023 | | EP | 4306355 A1 | 17-01-2024 |
| | | | | US | 11784491 B1 | 10-10-2023 |
| | | | | US | 2024017638 A1 | 18-01-2024 |
| US 2020023747 | A1 | 23-01-2020 | | EP | 3585641 A1 | 01-01-2020 |
| | | | | US | 2020023747 A1 | 23-01-2020 |
| | | | | US | 2023356605 A1 | 09-11-2023 |
| | | | | US | 2025074213 A1 | 06-03-2025 |
| | | | | WO | 2018156732 A1 | 30-08-2018 |
| US 10836275 | B2 | 17-11-2020 | | NONE | | |

EPO FORM P0459

For more details about this annex : see Official Journal of the European Patent Office, No. 12/82

page 2 of 2